# EUROPEAN PATENT APPLICATION

(11) **EP 4 851 797 A1**
(43) Date of publication of application: **09.12.2026**
(21) Application number: 25862226.5
(22) Date of filing: 28.07.2025
(51) Int. Cl.: G06F 9/455, G06F 9/50

(54) **VIRTUAL MACHINE CREATION PROCESSING METHOD, RELATED APPARATUS, AND MEDIUM**

(30) Priority: 09.09.2024 CN 202411253898
(71) Applicant: Tencent Technology (Shenzhen) Company Limited, Shenzhen, Guangdong 518057 (CN)
(72) Inventor: SU, Qixiang, Shenzhen, Guangdong 518057 (CN); LI, Li, Shenzhen, Guangdong 518057 (CN); ZENG, Junliang, Shenzhen, Guangdong 518057 (CN); SUN, Zixiang, Shenzhen, Guangdong 518057 (CN); TANG, Qian, Shenzhen, Guangdong 518057 (CN)
(74) Representative: Gunzelmann, Rainer
(86) International application number: PCT/CN2025/110889
(87) International publication number: WO 2026/051644

(57) **Abstract**

The present disclosure provides a virtual machine creation processing method, a related apparatus, and a medium. The method comprises: in response to a creation request for a target virtual machine, determining a target server on which the target virtual machine will be located, the target server comprising a target network card; if the type of the target virtual machine is a first type, acquiring, from the target server, a processing resource body architecture associated with the target network card, the first type being used to indicate that the target virtual machine needs to work in coordination with the target network card; acquiring target associated resource information of the target virtual machine; on the basis of the target associated resource information, determining a target processing resource body in the processing resource body architecture; and allocating the target processing resource body to the target virtual machine, so as to create the target virtual machine on the basis of the target processing resource body and the target network card. The present disclosure can improve the network request forwarding efficiency of virtual machines. The present disclosure is applicable to various scenarios such as computers, artificial intelligence, and cloud technology.

## Description

This application claims priority to Chinese Patent Application No. 202411253898.3, filed with the China National Intellectual Property Administration on September 9, 2024, and entitled "VIRTUAL MACHINE CREATION PROCESSING METHOD, RELATED APPARATUS, AND MEDIUM".

### FIELD OF THE TECHNOLOGY

The present disclosure relates to the technical field of computers, and in particular, to virtual machine creation processing.

### BACKGROUND OF THE DISCLOSURE

Currently, in a cloud computing environment, network function virtualization (NFV) is often implemented through virtual machines, so as to utilize virtual machines capable of implementing the NFV to perform a network request forwarding function.

In the related art, a server includes both a virtual machine and a network interface card (a gateway). A network request forwarding process of the virtual machine in the server often relies on the network interface card. When creating a virtual machine, it is required to allocate a slice of internal central processing unit (CPU) resources to the virtual machine within the server, so as to create the virtual machine. However, after the virtual machine is created based on the network interface card and the internal CPU resources of the server, issues of low network speed and access bandwidth frequently arise, thereby leading to low efficiency in network request forwarding.

### SUMMARY

Embodiments of the present disclosure including the embodiments of both the claims and the specification (hereinafter referred to as "all embodiments of the present disclosure") provide a method for creating a virtual machine, a related apparatus, and a medium, thereby improving network request forwarding efficiency of a virtual machine.

According to an aspect of the present disclosure, a method for creating a virtual machine is provided, including:
determining, in response to a creation request for creating the virtual machine, a server for creating the virtual machine, the server including a network interface card;
acquiring, from the server, a processing resource entity architecture associated with the network interface card when a type of the virtual machine is a first type, the first type indicating that the virtual machine is configured to cooperate with the network interface card;
acquiring resource information for the virtual machine;
determining, based on the resource information, a processing resource entity in the processing resource entity architecture; and
creating the virtual machine by using the processing resource entity and the network interface card, where the processing resource entity is allocated to the virtual machine.

According to an aspect of the present disclosure, an apparatus for creating a virtual machine is provided, including:
a first determining unit, configured to determine, in response to a creation request for creating the virtual machine, a server for creating the virtual machine, the server including a network interface card;
a first acquisition unit, configured to acquire, from the server, a processing resource entity architecture associated with the network interface card when a type of the virtual machine is a first type, the first type indicating that the virtual machine is configured to cooperate with the network interface card;
a second acquisition unit, configured to acquire resource information for the virtual machine;
a second determining unit, configured to determine, based on the resource information, a processing resource entity in the processing resource entity architecture; and
a creation unit, configured to create the virtual machine using the processing resource entity and the network interface card, where the processing resource entity is allocated to the virtual machine.

According to an aspect of the present disclosure, an electronic device is provided, including a memory and a processor, the memory having a computer program stored therein. The processor, when executing the computer program, implements the method for creating the virtual machine described above.

According to an aspect of the present disclosure, a computer-readable storage medium is provided, having a computer program stored therein, the computer program, when executed by a processor, implementing the method for creating the virtual machine described above.

According to an aspect of the present disclosure, a computer program product is provided, including a computer program, the computer program being read and executed by a processor of an electronic device to cause the electronic device to perform the method for creating the virtual machine described above.

In view of the issue in the related art that, after a virtual machine is created, the virtual machine needs to associate with a network interface card through a relatively long transmission path, resulting in low efficiency in network request forwarding: in all embodiments of the present disclosure, when a creation request for creating the virtual machine is received, a server for creating the virtual machine may be first determined in response to the creation request for creating the virtual machine. Sufficient CPU resources for creating the virtual machine are provided using the server. The server includes a network interface card. Further, when a type of the virtual machine is a first type (the first type indicating that the virtual machine is configured to cooperate with the network interface card), a processing resource entity architecture associated with the network interface card is acquired from the server, so as to preferentially select the processing resource entity architecture in which the network interface card is located, and provide processing resources for the virtual machine based on the processing resource entity architecture, thereby facilitating shortening of a transmission path between the virtual machine and the network interface card, and avoiding issues of low network speed and access bandwidth caused by deploying the virtual machine and the network interface card in different resource entity architectures. Further, in all embodiments of the present disclosure, after the processing resource entity architecture is determined, considering that the processing resource entity architecture includes a plurality of processing resource entities, resource information for the virtual machine is further acquired, and a processing resource entity is determined from among the plurality of processing resource entities included in the processing resource entity architecture based on the resource information, to perform reasonable resource allocation according to the resource information. Finally, the virtual machine is created by using the processing resource entity and the network interface card, where the processing resource entity is allocated to the virtual machine. Therefore, by selecting a processing resource entity on the processing resource entity architecture associated with the network interface card to provide CPU resources required for creating the virtual machine, the virtual machine and the network interface card can be deployed in the same processing resource entity architecture. When the virtual machine performs network request forwarding, it is not required to establish a connection with the network interface card through a transmission protocol and a relatively long transmission path, thereby avoiding issues of low network speed and access bandwidth and improving efficiency in network request forwarding of the virtual machine.

### BRIEF DESCRIPTION OF THE DRAWINGS

FIG. 1 is a schematic structural diagram of a system to which a method for creating a virtual machine is applied, according to an embodiment of the present disclosure;
FIG. 2A to FIG. 2F are schematic diagrams of a method for creating a virtual machine being applied in a virtual machine creation scenario according to an embodiment of the present disclosure;
FIG. 3 is a flowchart of a method for creating a virtual machine according to an embodiment of the present disclosure;
FIG. 4 is a flowchart of determining a server from among a plurality of candidate servers according to an embodiment of the present disclosure;
FIG. 5 is a flowchart of determining a server from among a plurality of intermediate servers according to an embodiment of the present disclosure;
FIG. 6 is a flowchart of determining an intermediate server according to an embodiment of the present disclosure;
FIG. 7 is a schematic diagram of an implementation process of determining an intermediate server according to an embodiment of the present disclosure;
FIG. 8 is a flowchart of determining a priority score of an intermediate server according to an embodiment of the present disclosure;
FIG. 9 is a schematic diagram of an implementation process of determining a priority score of an intermediate server according to an embodiment of the present disclosure;
FIG. 10 is a flowchart of determining a processing resource entity architecture according to an embodiment of the present disclosure;
FIG. 11 is a schematic diagram of an implementation process of determining a processing resource entity architecture according to an embodiment of the present disclosure;
FIG. 12 is a flowchart of determining a processing resource entity according to an embodiment of the present disclosure;
FIG. 13 is a flowchart of determining a resource entity level according to an embodiment of the present disclosure;
FIG. 14A to FIG. 14B are schematic diagrams of an implementation process of determining a resource entity level according to an embodiment of the present disclosure;
FIG. 15 is a flowchart of determining a processing resource entity according to another embodiment of the present disclosure;
FIG. 16 is a schematic diagram of an implementation process of determining a processing resource entity according to an embodiment of the present disclosure;
FIG. 17 is a flowchart of creating a virtual machine of a second type according to an embodiment of the present disclosure;
FIG. 18 is a flowchart of creating a virtual machine of a third type according to an embodiment of the present disclosure;
FIG. 19 is a flowchart of pre-configuring each candidate server according to an embodiment of the present disclosure;
FIG. 20 is a schematic diagram of an implementation of pre-configuring each candidate server according to an embodiment of the present disclosure;
FIG. 21 is a schematic diagram of implementation details of a method for creating a virtual machine according to an embodiment of the present disclosure;
FIG. 22 is a block diagram of an apparatus for creating a virtual machine according to an embodiment of the present disclosure;
FIG. 23 is a structural diagram of a terminal implementing a method for creating a virtual machine according to an embodiment of the present disclosure; and
FIG. 24 is a structural diagram of a server implementing a method for creating a virtual machine according to an embodiment of the present disclosure.

### DESCRIPTION OF EMBODIMENTS

To make objectives, technical solutions, and advantages of the present disclosure clearer, the present disclosure will be further described below in detail with reference to accompanying drawings and embodiments. Specific embodiments described herein are merely used to explain the present disclosure rather than limit the present disclosure.

A system and a scenario to which the embodiments of the present disclosure including the embodiments of both the claims and the specification (hereinafter referred to as "all embodiments of the present disclosure") are applied are described below.

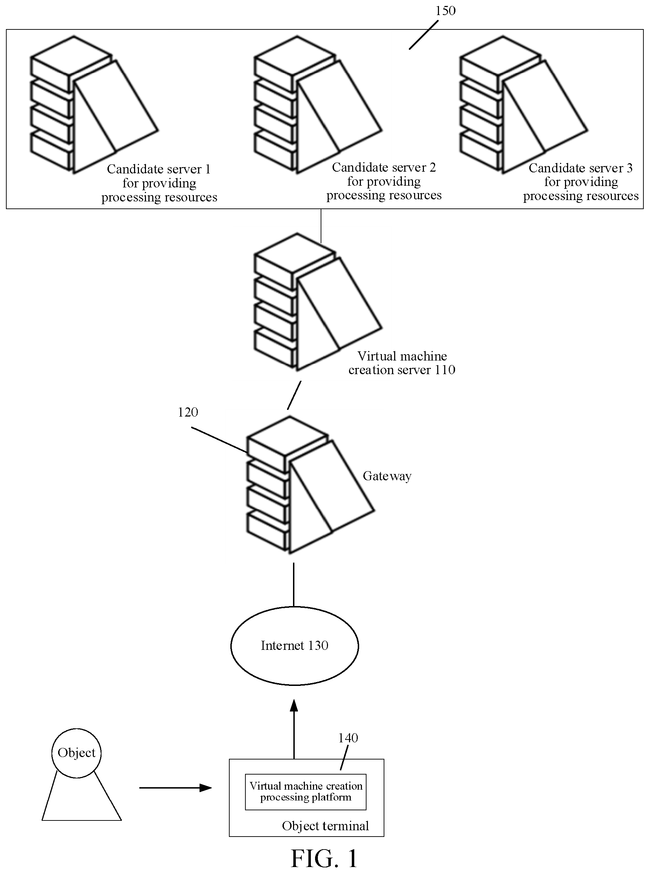

FIG. 1 is a schematic structural diagram of a system to which a method for creating a virtual machine is applied, in all embodiments of the present disclosure. The system may include an object terminal 140, the Internet 130, a gateway 120, a virtual machine creation server 110, candidate servers 150, and the like.

The object terminal 140 includes multiple forms such as a desktop computer, a laptop computer, a personal digital assistant (PDA), a mobile phone, an in-vehicle terminal, a home theater terminal, and a dedicated terminal. In addition, the object terminal 140 may be a single device or a collection of a plurality of devices. The object terminal 140 may communicate with the Internet 130 in a wired or wireless manner to exchange data. The object terminal 140 includes a virtual machine creation processing platform. The virtual machine creation processing platform is configured to enable an object (i.e., an object using the virtual machine creation processing platform) to set some parameters required for creating a virtual machine. The object involved in this application may be a real user using the virtual machine creation processing platform, or an object controlled by an artificial intelligence (AI) device. This is not limited herein.

The virtual machine creation server 110 and the plurality of candidate servers 150 configured to provide processing resources refer to computer systems that may provide some services to the object terminal 140. Compared with an ordinary object terminal 140, the virtual machine creation server 110 and the candidate servers 150 have higher requirements in terms of stability, security, performance, and other aspects. The virtual machine creation server 110 and the candidate servers 150 may be, in a network platform, a high-performance computer, a cluster of multiple high-performance computers, a portion (for example, a virtual machine) partitioned from a high-performance computer, a combination of portions (for example, virtual machines) partitioned from multiple high-performance computers, or the like. The virtual machine creation server 110 and the candidate servers 150 include multiple types of services. Implementations of the services of the virtual machine creation server 110 and the candidate servers 150 are usually associated with some intermediate databases, storage media, or the like. The virtual machine creation server 110 is configured to receive a creation request creating a virtual machine from an object, and screen, based on the creation request, a candidate server most suitable for creating a virtual machine from among a plurality of candidate servers for providing processing resources (for example, candidate server 1, candidate server 2, and candidate server 3), and determine, from the server, a specific module for providing processing resources for creating the virtual machine. The candidate servers 150 are configured to provide internal CPU resources, so as to create various types of virtual machines. The types of virtual machines to be created are determined by user requirements.

The gateway 120 is also referred to as an internetwork connector or a protocol converter. The gateway implements network interconnection at a transport layer and is a computer system or device providing a conversion function. Between two systems using different communication protocols, data formats, or languages, or even having completely different architectures, the gateway is a translator. Meanwhile, the gateway may also provide filtering and security functions. Messages transmitted by the object terminal 140 to the virtual machine creation server 110 and the candidate servers 150 are transmitted through the gateway 120 to the corresponding virtual machine creation server 110 and the candidate server 150. Messages transmitted by the virtual machine creation server 110 and the candidate servers 150 to an object terminal 140 are also transmitted through the gateway 120 to the corresponding object terminal 140.

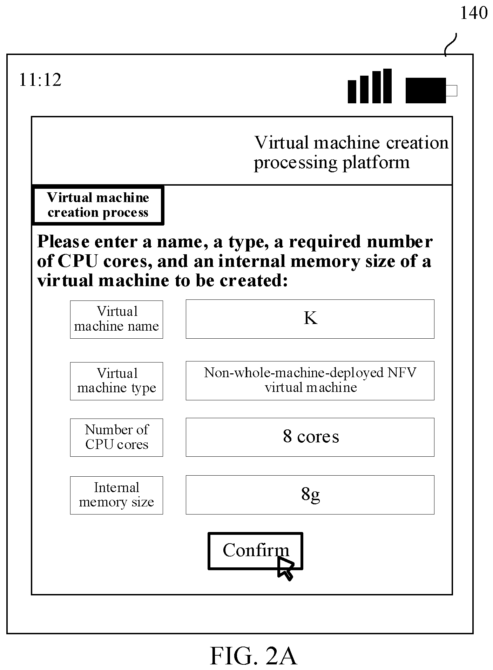

The embodiments of the present disclosure may be applied in a plurality of scenarios, for example, a virtual machine creation scenario shown in FIG. 2A to FIG. 2F.

As shown in FIG. 2A, when an object intends to create a virtual machine, the object logs in to a virtual machine creation processing platform through an object terminal, and enters a virtual machine creation process. At this time, a prompt field reading "Please enter a name, a type, a required number of CPU cores, and an internal memory size of a virtual machine to be created" is displayed on a page, and there are provided an editing area for entering a virtual machine name, an editing area for entering a virtual machine type, an editing area for entering a required number of CPU cores for creating the virtual machine, and an editing area for entering a required internal memory size for creating the virtual machine. Based on this, the object enters "K" in the editing area for entering the virtual machine name, enters "non-whole-machine-deployed NFV virtual machine" in the editing area for entering the virtual machine type, enters "8 cores" in the editing area for entering the required number of CPU cores for creating the virtual machine, and enters "8G" in the editing area for entering the required internal memory size for creating the virtual machine, and clicks a "Confirm" button, to confirm creation of a non-whole-machine-deployed NFV virtual machine K. In addition, creating the virtual machine K requires a server to provide CPU resources of 8 cores and an internal memory size of 8G.

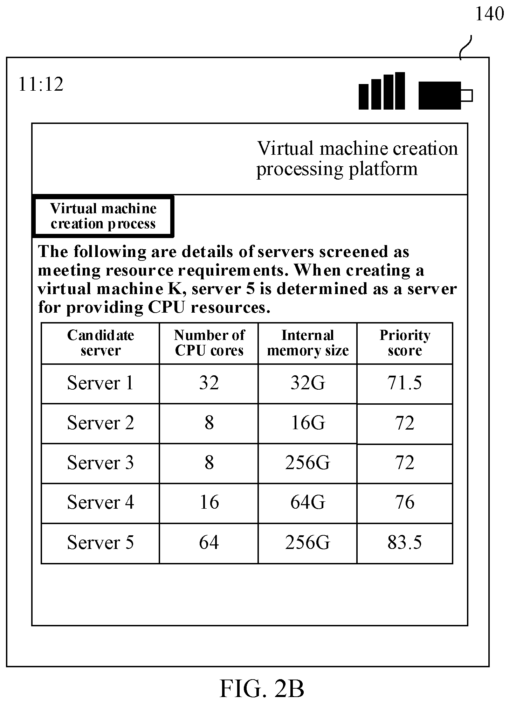

As shown in FIG. 2B, after the object clicks the "Confirm" button, a prompt field reading "The following are details of servers screened as meeting resource requirements." is displayed on the page, and a list indicating the number of CPU cores, the internal memory size, and a priority score of respective candidate servers is displayed. Since the number of CPU cores of server 5 is 64 and the internal memory size thereof is 256G, processing resources in server 5 are the most sufficient. Accordingly, when creating a virtual machine K, server 5 is determined as a server for providing CPU resources.

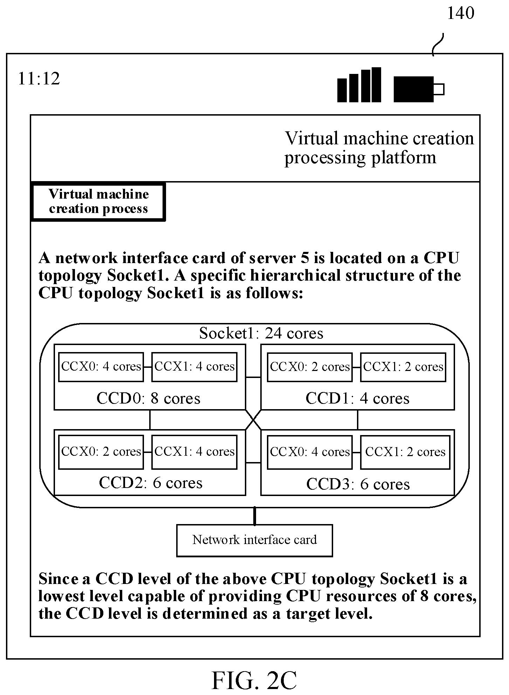

As shown in FIG. 2C, after the server is determined, the virtual machine creation server looks up a CPU topology inside the server 5 in which a network interface card is located, and displays, on the page, a prompt field reading "A network interface card of server 5 is located on a CPU topology Socket1. A specific hierarchical structure of the CPU topology Socket1 is as follows". Meanwhile, a specific hierarchical structure diagram of the CPU topology Socket1 is further displayed on the page. The object may view, on an interface, what nested levels are included in the specific hierarchical structure diagram and a specific number of CPU resources included in each level. The CPU topology Socket1 includes four core chiplet die (CCD) structures, and each CCD structure includes two CPU complex (CCX) structures. Based on the processing resource information initially configured by the object and the specific hierarchical structure, a prompt field reading "Since a CCD level of the above CPU topology Socket1 is a lowest level capable of providing CPU resources of 8 cores, the CCD level is determined as a target level" is further displayed on the page, to prompt the object that a CCD structure is to be selected on the CCD level as a carrier for providing CPU resources.

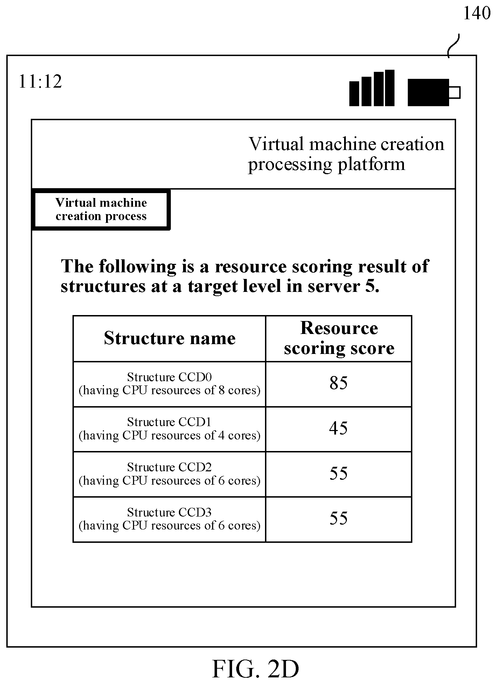

As shown in FIG. 2D, after the CCD level is determined as the target level, the virtual machine creation server performs resource scoring for respective CCD structures at the CCD level of server 5. At this time, a prompt field reading "The following is a resource scoring result of structures at a target level in server 5." is displayed on the page, and resource scoring details of each CCD structure are displayed. A resource scoring score of a structure CCD0 having CPU resources of 8 cores is 85. A resource scoring score of a structure CCD1 having CPU resources of 4 cores is 45. A resource scoring score of a structure CCD2 having CPU resources of 6 cores is 55. A resource scoring score of a structure CCD3 having CPU resources of 6 cores is 55. Based on this, the virtual machine creation server selects the structure CCD0 having the maximum resource scoring score as a carrier for providing CPU resources.

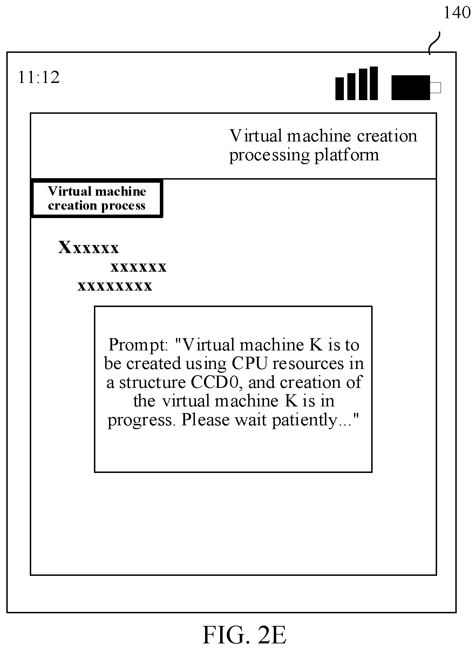

As shown in FIG. 2E, after the carrier for providing CPU resources is determined, a prompt window is displayed on the page, and a prompt field reading "Virtual machine K is to be created using CPU resources in a structure CCD0, and creation of the virtual machine K is in progress. Please wait patiently..." is provided in the prompt window, to indicate a specific location inside the server 5 where the virtual machine K is to be created.

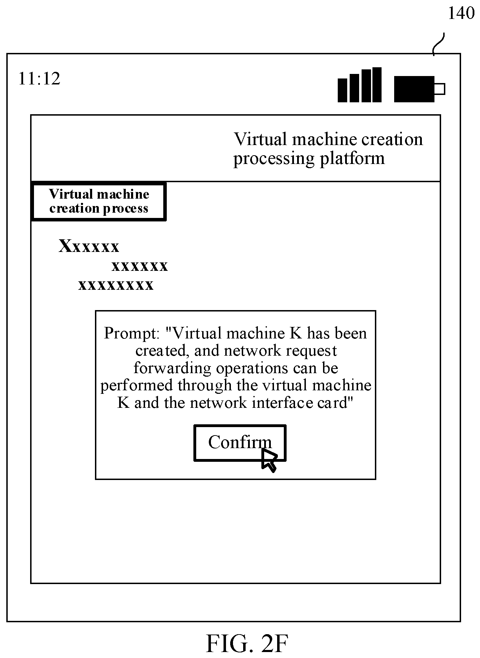

As shown in FIG. 2F, after the virtual machine K is created, a prompt window is displayed on the page, and a prompt field reading "Virtual machine K has been created, and network request forwarding operations can be performed through the virtual machine K and the network interface card" is provided in the prompt window, to indicate that the object has successfully created the virtual machine K.

A Socket refers to a physical CPU topology inside a server. A CCD refers to a computing chip inside a server, and a CCX refers to a computing core inside a server. Inside the server, a CCX is often provided on a CCD chip, and the CCD chip is deployed on a physical CPU topology (Socket). A server typically includes at least two Socket structures internally.

The embodiments of the present disclosure are described in general below.

In all embodiments of the present disclosure, a method for creating a virtual machine may be provided.

The method for creating the virtual machine is generally applied in a business scenario of allocating processing resources of a server for creating different types of virtual machines, for example, the virtual machine creation scenario shown in FIG. 2A to FIG. 2F. In all embodiments of the present disclosure, in the creation of a virtual machine for implementing a network request forwarding function, a solution for allocating processing resources to virtual machines based on performance metrics of a server and a location of a network interface card is provided, so as to improve efficiency in network request forwarding of the virtual machines.

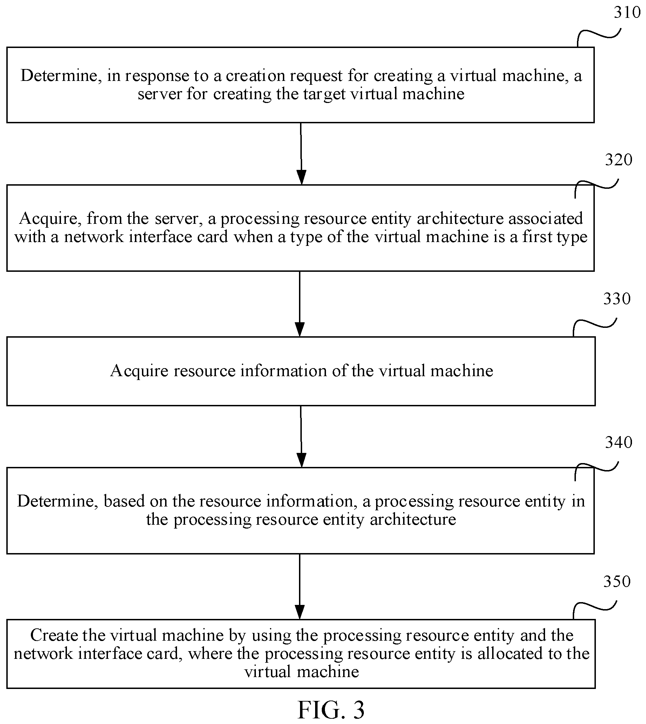

As shown in FIG. 3, a method for creating a virtual machine according to an embodiment of the present disclosure may include the following operations.

Operation 310: Determine, in response to a creation request for creating a virtual machine, a server for creating the virtual machine.

Operation 320: Acquire, from the server, a processing resource entity architecture associated with a network interface card when a type of the virtual machine is a first type.

Operation 330: Acquire resource information for the virtual machine.

Operation 340: Determine, based on the resource information, a processing resource entity in the processing resource entity architecture.

Operation 350: Create the virtual machine by using the processing resource entity and the network interface card, where the processing resource entity is allocated to the virtual machine.

Operations 310 to 350 are described in detail below.

In operation 310, in response to a creation request for creating the virtual machine, a server in which the virtual machine is located is determined.

The virtual machine refers to a to-be-created virtual machine. Creation of the virtual machine occupies processing resources, such as CPU resources (such as a number of CPU cores) and internal memory of a server.

The creation request is a request transmitted by a user to the virtual machine creation server through the object terminal when the user intends to create a virtual machine. The creation request may record resource information configured by the user, such as the number of CPU cores and an internal memory size required for creating the virtual machine.

The server refers to a candidate server screened by the virtual machine creation server from among a plurality of candidate servers, and configured to provide processing resources (for example, sufficient CPU resources) for creating the virtual machine. The virtual machine is deployed in the server after creation. The server includes a network interface card. The network interface card is configured to assist the virtual machine in implementing network request forwarding.

In all embodiments of the present disclosure, when an object needs to create a virtual machine in a server, the object may transmit a creation request for creating the virtual machine to a virtual machine creation server through an object terminal. Based on this, in response to the creation request for creating the virtual machine, the virtual machine creation server first acquires server performance and processing resource requirements to be satisfied by a server for creating the virtual machine. Then, based on the server performance and processing resources required for creating the virtual machine, the server is determined from among a plurality of alternative servers, and the virtual machine is to be deployed on the server.

For brevity, a specific implementation process of determining a server in which the virtual machine is located in the embodiments of the present disclosure will be described in detail below. Details are not described herein again.

In operation 320, when a type of the virtual machine is a first type, a processing resource entity architecture associated with a network interface card is acquired from the server.

The first type indicates that the virtual machine is configured to cooperate with the network interface card.

The processing resource entity architecture refers to a resource entity architecture inside the server in which the network interface card is located. In all embodiments of the present disclosure, the processing resource entity architecture may refer to a hierarchical topological structure of physical CPU resources within the server. By way of example and not limitation, such an architecture may include levels of Socket (physical CPU socket), CCD (Core Chiplet Die), and CCX (CPU Complex).

In all embodiments of the present disclosure, when a type of the virtual machine is a first type, the virtual machine may be a virtual machine capable of implementing network request forwarding (a non-whole-machine-deployed NFV virtual machine), and the virtual machine is configured to cooperate with the network interface card when performing network request forwarding. Whether a to-be-created virtual machine is configured to cooperate with the network interface card depends on whether a network request is to be forwarded through the to-be-created virtual machine, and whether a network request is to be forwarded depends on user requirements. Based on this, the processing resource entity architecture associated with the network interface card is determined from the server. The processing resource entity architecture inside the server and associated with the network interface card refers to the processing resource entity architecture in which the network interface card is located.

In operation 330, resource information for the virtual machine is acquired.

The resource information indicates specific resource information such as a specific number of CPU cores and an internal memory size required for creating the virtual machine.

In all embodiments of the present disclosure, when an object transmits a creation request for creating the virtual machine, the object may perform resource allocation for the virtual machine on a front-end interface of the object terminal, and sets processing resource conditions (for example, an internal memory size and a computing resource amount) required for creating the virtual machine. As a possible implementation manner, in a case where authorization is granted, request parsing is performed on the creation request to acquire resource information for the virtual machine. Alternatively, preset resource information is selected and determined as the resource information.

In operation 340, a processing resource entity is determined from the processing resource entity architecture based on the resource information.

The processing resource entity refers to a module that is determined in a processing resource entity architecture inside the server and that provides resources for creating the virtual machine. The processing resource entity may indicate a specific location of the virtual machine inside the server.

For brevity, in all embodiments of the present disclosure, a specific implementation process of determining, based on the resource information, a processing resource entity in the processing resource entity architecture will be described in detail below. Details are not described herein again.

In operation 350, the virtual machine may be created by using the processing resource entity and the network interface card, where the processing resource entity is allocated to the virtual machine.

In all embodiments of the present disclosure, first, processing resources carried by the processing resource entity may be allocated to the virtual machine. Then, by using the processing resources carried by the processing resource entity, the virtual machine is created inside the server, and the virtual machine is associated with the network interface card, so as to complete creation of the virtual machine.

Through the foregoing operations 310 to 350, in view of the issue in the related art that, after a virtual machine is created, the virtual machine needs to associate with a network interface card through a relatively long transmission path, resulting in low efficiency in network request forwarding, in all embodiments of the present disclosure, when a creation request for creating the virtual machine is received, a server configured for creating the virtual machine may be first determined in response to the creation request for creating the virtual machine. Sufficient CPU resources for creating the virtual machine are provided using the server. The server includes a network interface card. Further, when a type of the virtual machine is a first type (the first type indicating that the virtual machine is configured to cooperate with the network interface card), a processing resource entity architecture associated with the network interface card is acquired from the server, so as to preferentially select the processing resource entity architecture in which the network interface card is located, and provide processing resources for the virtual machine based on the processing resource entity architecture, thereby facilitating shortening of a transmission path between the virtual machine and the network interface card, and avoiding issues of low network speed and access bandwidth caused by deploying the virtual machine and the network interface card in different resource entity architectures. Further, in all embodiments of the present disclosure, after the processing resource entity architecture is determined, considering that the processing resource entity architecture includes a plurality of processing resource entities, resource information for the virtual machine may further be acquired, and a processing resource entity is determined from among the plurality of processing resource entities included in the processing resource entity architecture based on the resource information, to perform reasonable resource allocation according to the resource information. Finally, the virtual machine may be created by using the processing resource entity and the network interface card, where the processing resource entity is allocated to the virtual machine. Therefore, by selecting a processing resource entity on the processing resource entity architecture associated with the network interface card to provide CPU resources required for creating the virtual machine, the virtual machine and the network interface card may be deployed in the same processing resource entity architecture. When the virtual machine performs network request forwarding, it is not required to establish a connection with the network interface card through a transmission protocol and a relatively long transmission path, thereby avoiding issues of low network speed and access bandwidth and improving efficiency in network request forwarding of the virtual machine.

The foregoing is a general description of operations 310 to 350. Since operation 330 and operation 350 have been sufficiently detailed in the foregoing general description, a detailed description of specific implementations of operation 310, operation 320, and operation 340 is provided below.

Operation 310 is described in detail below.

In operation 310, in response to a creation request for creating the virtual machine, a server in which the virtual machine is located is determined. The server includes a network interface card.

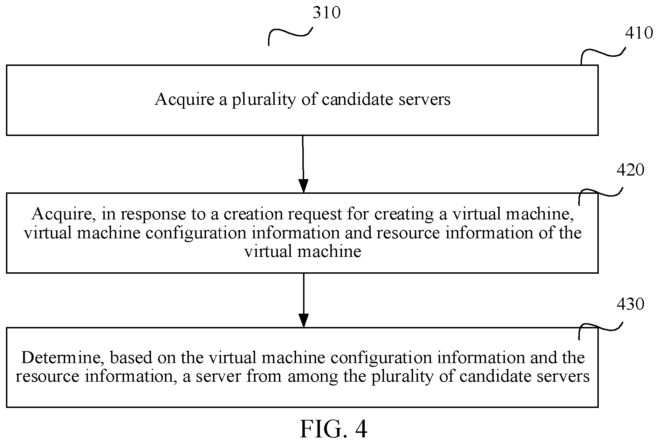

Referring to FIG. 4, in all embodiments of the present disclosure, a process of determining a server for creating the virtual machine, that is, determining a server in which the virtual machine is located may include, but is not limited to, the following operations 410 to 430:
Operation 410: Acquire a plurality of candidate servers.

Operation 420: Acquire, in response to a creation request for creating the virtual machine, virtual machine configuration information and resource information for the virtual machine.

Operation 430: Determine, based on the virtual machine configuration information and the resource information, a server from among the plurality of candidate servers.

Operations 410 to 430 are described in detail below.

In operation 410, a plurality of candidate servers are acquired.

The candidate server refers to a server capable of providing processing resources for creating the virtual machine.

In all embodiments of the present disclosure, candidate servers capable of providing processing resources for creating various virtual machines may be all stored in a server resource pool. Based on this, in a case where authorization is granted, a plurality of candidate servers may be acquired from the server resource pool, so as to screen the server from among the plurality of candidate servers.

In operation 420, in response to a creation request for creating the virtual machine, virtual machine configuration information and resource information for the virtual machine are acquired.

The virtual machine configuration information is information required for creating the virtual machine, for example, information configured for indicating a specific type and a size specification of the virtual machine.

In all embodiments of the present disclosure, since model specification configuration information of different types of virtual machines is often fixed, model specification configuration information of various types of virtual machines may be stored in a virtual machine database. Based on this, when receiving the creation request for creating the virtual machine, the virtual machine creation server first determines a specific type of the virtual machine based on the creation request. Then, in a case where authorization is granted, based on the specific type of the virtual machine, model specification configuration information corresponding to the specific type is acquired from the virtual machine database, and the acquired model specification configuration information is determined as the virtual machine configuration information of the virtual machine.

A specific process of acquiring resource information for the virtual machine in the embodiment is similar to the foregoing operation 330. For brevity, details are not repeated.

In operation 430, based on the virtual machine configuration information and the resource information, a server is determined from among the plurality of candidate servers.

In all embodiments of the present disclosure, server resource usage status and performance status of each candidate server may be compared with the virtual machine configuration information and the resource information, and a candidate server capable of satisfying processing resource requirements for creating the virtual machine and having relatively good performance is selected as the server.

An advantage of the embodiments is that when determining the server, based on the virtual machine configuration information and the resource information for the virtual machine, a plurality of candidate servers in the server resource pool are determined, so as to screen, as the server, a candidate server capable of satisfying processing resource requirements for creating the virtual machine and having relatively good performance, thereby improving accuracy of screening the server.

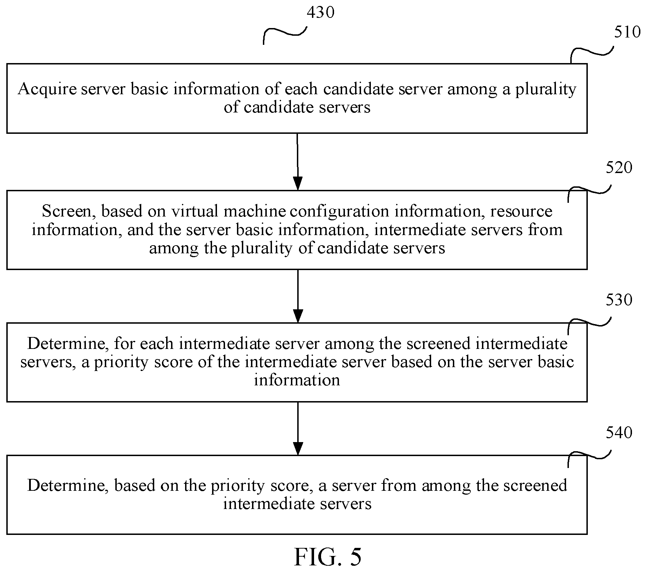

Referring to FIG. 5, in all embodiments of the present disclosure, operation 430 may include, but is not limited to, the following operations 510 to 540:
Operation 510: Acquire server basic information of each candidate server among the plurality of candidate servers.

Operation 520: Screen, based on the virtual machine configuration information, the resource information, and the server basic information, intermediate servers from among the plurality of candidate servers.

Operation 530: Determine, for each intermediate server among the screened intermediate servers, a priority score of the intermediate server based on the server basic information.

Operation 540: Determine, based on the priority score, a server from among the screened intermediate servers.

Operations 510 to 540 are described in detail below.

In operation 510, server basic information of each candidate server is acquired.

The server basic information is information configured for describing the candidate servers, such as resource usage status including a number of CPU cores, an internal memory size, a storage type, a network bandwidth, and a CPU usage rate of the candidate servers, and various performance metrics.

In all embodiments of the present disclosure, data such as server basic information of each candidate server in the server resource pool may be recorded in a preset database in a server pre-configuration phase before a virtual machine creation phase. Based on this, in a case where authorization is granted, the server basic information of each candidate server may be acquired from the preset database.

In operation 520, based on the virtual machine configuration information, the resource information, and the server basic information, intermediate servers are screened from among the plurality of candidate servers.

The intermediate server refers to a candidate server of which performance metrics and resource usage status satisfy basic requirements for creating the virtual machine.

In all embodiments of the present disclosure, for each candidate server, the server basic information may be compared with the virtual machine configuration information, and the server basic information is compared with the resource information. Then, a candidate server of which server basic information satisfies virtual machine creation requirements corresponding to the virtual machine configuration information and the resource information is determined as the intermediate server.

For example, a number of CPU cores and an internal memory size of the intermediate server are required to be greater than or equal to the number of CPU cores and the internal memory size required in the resource information.

In operation 530, for each intermediate server among the screened intermediate servers, a priority score of the intermediate server is determined based on the server basic information.

The priority score is configured for indicating a degree of priority for using the intermediate server as the server for creating the virtual machine. The larger the priority score is, the higher the priority is for using the intermediate server as the server.

In all embodiments of the present disclosure, the server basic information of the intermediate servers may include a plurality of metrics. For each candidate server, scoring may be performed on metrics in the server basic information, to obtain a respective priority sub-score corresponding to each metric. Then, priority sub-scores of all the metrics are integrated into the priority score of the intermediate server.

In operation 540, based on the priority score, a server is determined from among the screened intermediate servers.

In all embodiments of the present disclosure, first, the intermediate servers may be sorted in an order of priority scores from large to small according to the priority scores, to obtain a server sequence. Then, in the server sequence, the intermediate server ranked first is determined as the server.

Further, since a server status of the intermediate servers is dynamically changing, in order to improve availability of the screened intermediate server, an intermediate server may alternatively be randomly selected, as the server, from a predetermined number of intermediate servers at the front of the server sequence.

An advantage of the embodiments is that a combination of condition filtering and priority scoring is employed when determining the server. Among the candidate servers, candidate servers of which server basic information satisfies basic requirements (virtual machine creation requirements corresponding to the virtual machine configuration information and the resource information) are first screened as an intermediate servers. Then, priority scores of the intermediate servers are determined according to a scoring policy, and the priority score is configured for quantifying selection priority of the intermediate server when creating the virtual machine, so as to preferentially select a candidate server satisfying the basic requirements and having better performance metrics as the server, thereby improving accuracy and rationality of server screening.

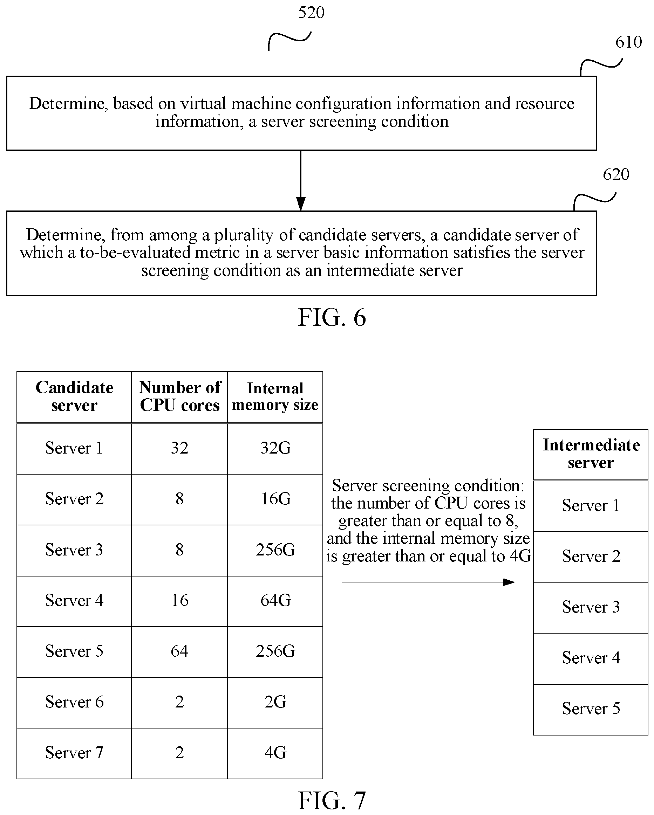

Referring to FIG. 6, in all embodiments of the present disclosure, operation 520 may include, but is not limited to, the following operations 610 to 620:
Operation 610: Determine, based on the virtual machine configuration information and the resource information, a server screening condition.

Operation 620: Determine, from among the plurality of candidate servers, the candidate server of which a to-be-evaluated metric in the server basic information satisfies the server screening condition as the intermediate server.

Operations 610 to 620 are described in detail below.

In operation 610, a server screening condition is determined based on the virtual machine configuration information and the resource information.

The server screening condition is configured for indicating minimum performance metrics to be satisfied by the server.

In all embodiments of the present disclosure, first, metrics related to a server may be acquired from the virtual machine configuration information and the resource information, the acquired metrics are determined as to-be-evaluated metrics, and metric values of the metrics in the virtual machine configuration information and the resource information are determined as metric thresholds of the to-be-evaluated metrics. Then, the to-be-evaluated metrics and metric thresholds thereof are integrated into the server screening condition.

For example, the metrics related to a server in the virtual machine configuration information and the resource information are: a number of CPU cores required for creating the virtual machine is 4, and an internal memory size is 8G. Based on this, the server screening condition is determined as: a number of CPU cores of the server is greater than or equal to 4, and an internal memory size is greater than or equal to 8G.

In operation 620, for each candidate server, specific metric values of the to-be-evaluated metrics are acquired from the server basic information of the candidate server. Then, the specific metric values of the to-be-evaluated metrics are compared with the minimum metric values of the to-be-evaluated metrics in the server screening condition. Further, based on the comparison, candidate servers of which the specific metric values of all the to-be-evaluated metrics are greater than or equal to the minimum metric values of the to-be-evaluated metrics in the server screening condition are determined as the intermediate servers.

As shown in FIG. 7, the server screening condition determined based on the virtual machine configuration information and the resource information for the virtual machine is: the number of CPU cores is greater than or equal to 8, and the internal memory is greater than or equal to 4G. Based on the server basic information of each candidate server in the server resource pool, the number of CPU cores and the internal memory size of each candidate server are determined, respectively. The number of CPU cores of server 1 is 32, and the internal memory size thereof is 32G. The number of CPU cores of server 2 is 8, and the internal memory size thereof is 16G. The number of CPU cores of server 3 is 8, and the internal memory size thereof is 256G. The number of CPU cores of server 4 is 16, and the internal memory size thereof is 64G. The number of CPU cores of server 5 is 64, and the internal memory size thereof is 256G. The number of CPU cores of server 6 is 2, and the internal memory size thereof is 2G. The number of CPU cores of server 7 is 2, and the internal memory size thereof is 4G. Based on this, the number of CPU cores and the internal memory size of each candidate server are compared with the server screening condition, and a candidate server of which the number of CPU cores and the internal memory size both satisfy the server screening condition is screened. Since the number of CPU cores and the internal memory size of server 6 and server 7 both fail to satisfy the server screening condition, server 1, server 2, server 3, server 4, and server 5 are determined as the intermediate servers.

An advantage of the embodiments is that, by means of condition filtering, candidate servers failing to satisfy processing resources and performance metrics required by the virtual machine configuration information and the resource information may be excluded, and candidate servers of which server basic information satisfies basic requirements are retained as intermediate servers, thereby reducing adverse effects of non-compliant candidate servers on determining the server, and facilitating improvement of efficiency and accuracy in determining the server.

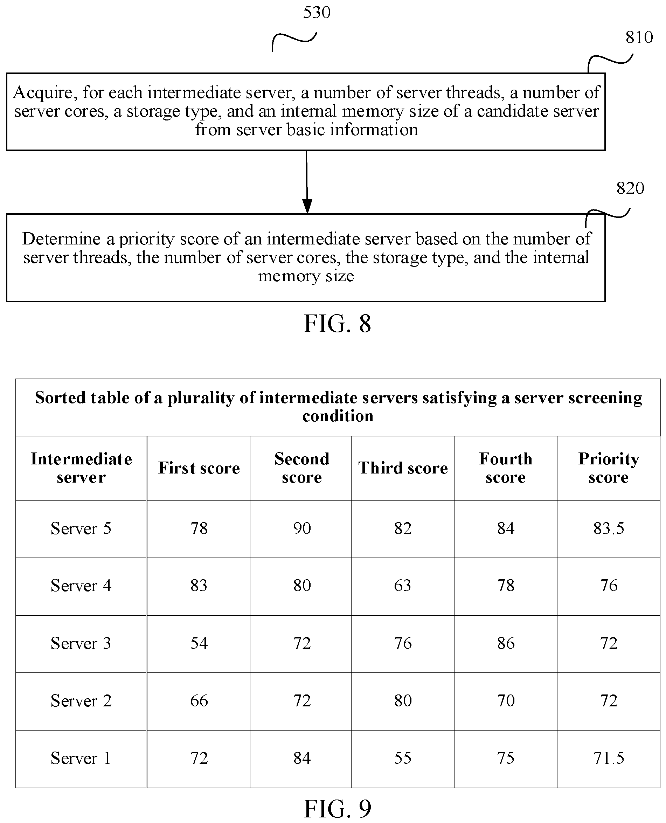

Referring to FIG. 8, in all embodiments of the present disclosure, operation 530 may include, but is not limited to, the following operations 810 to 820:
Operation 810: Acquire, for each intermediate server, a number of server threads, a number of server cores, a storage type, and an internal memory size of the candidate server from the server basic information.

Operation 820: Determine the priority score of the intermediate server based on the number of server threads, the number of server cores, the storage type, and the internal memory size.

Operations 810 to 820 are described in detail below.

In operation 810, for each intermediate server among the screened intermediate servers, a number of server threads, a number of server cores, a storage type, and an internal memory size of the candidate server are acquired from the server basic information.

The number of server threads is configured for indicating a total number of threads capable of independently executing tasks in a server.

The number of server cores is configured for indicating a total number of CPU cores in a server.

The storage type is configured for indicating a type of a hardware device configured to store data in a server.

The internal memory size is configured for indicating a size of resource storage space capable of being provided inside a server.

In all embodiments of the present disclosure, for each intermediate server, information extraction may be performed on the server basic information, so as to acquire the number of server threads, the number of server cores, the storage type, and the internal memory size of the intermediate server.

In operation 820, the priority score of the intermediate server is determined based on the number of server threads, the number of server cores, the storage type, and the internal memory size.

An advantage of the embodiments is that priority scores of the intermediate servers are determined based on a plurality of performance metrics in the server basic information of the intermediate servers, such as the number of server threads, the number of server cores, the storage type, and the internal memory size. Therefore, multi-dimensional scoring of the intermediate servers is implemented by determining the priority scores through the plurality of metrics, so that scoring dimensions have better comprehensiveness, and accuracy and rationality of the priority scores are improved.

In all embodiments of the present disclosure, operation 820 may include , but is not limited to, the following operations:
determining a first score of the intermediate server based on the number of server threads;
determining a second score of the intermediate server based on the number of server cores;
determining a third score of the intermediate server based on the storage type;
determining a fourth score of the intermediate server based on the internal memory size; and
obtaining the priority score based on a weighted sum of the first score, the second score, the third score, and the fourth score.

The first score is configured for indicating a degree of priority of the number of server threads of the candidate server in screening. The second score is configured for indicating a degree of priority of the number of server cores of the candidate server in screening. The third score is configured for indicating a degree of priority of the storage type of the candidate server in screening. The fourth score is configured for indicating a degree of priority of the internal memory size of the candidate server in screening.

Specifically, the number of server threads, the number of server cores, and the internal memory size are all numerical data. Based on this, first, a first function may be pre-constructed by taking the number of server threads as an independent variable (input) and taking the first score as a dependent variable (output). A second function may be constructed by taking the number of server cores as an independent variable (input) and taking the second score as a dependent variable (output). A third function may be constructed by taking the internal memory size as an independent variable (input) and taking the fourth score as a dependent variable (output). The first function, the second function, and the third function are all increasing functions. Then, the number of server threads of the intermediate server is inputted into the first function, so that the first score of the intermediate server may be obtained. The number of server cores of the intermediate server is inputted into the second function, so that the second score of the intermediate server may be obtained. The internal memory size of the intermediate server is inputted into the third function, so that the fourth score of the intermediate server may be obtained.

Further, the storage type is non-numerical data. Based on this, a table lookup method may be employed to acquire the third score. Specifically, first, a preset relationship mapping table is invoked. The relationship mapping table is configured for indicating candidate scores corresponding to the candidate storage types. The candidate storage types refer to storage types that may exist in a server. Then, the storage type of the intermediate server is compared with each candidate storage type in the relationship mapping table, and a candidate score corresponding to a candidate storage type consistent with the storage type is determined as the third score of the intermediate server.

Finally, score weights of the first score, the second score, the third score, and the fourth score are acquired, respectively. Then, based on the score weights, a weighted sum operation is performed on the first score, the second score, the third score, and the fourth score, to obtain a priority score.

FIG. 9 is a sorted table of a plurality of intermediate servers satisfying the server screening condition. Specifically, score weights of the first score, the second score, the third score, and the fourth score are all 0.25. Based on this, server 1 having a first score of 72, a second score of 84, a third score of 55, and a fourth score of 75 has a priority score of 71.5. Server 2 having a first score of 66, a second score of 72, a third score of 80, and a fourth score of 70 has a priority score of 72. Server 3 having a first score of 54, a second score of 72, a third score of 76, and a fourth score of 86 has a priority score of 72. Server 4 having a first score of 83, a second score of 80, a third score of 63, and a fourth score of 78 has a priority score of 76. Server 5 having a first score of 78, a second score of 90, a third score of 82, and a fourth score of 84 has a priority score of 83.5. Based on this, the five intermediate servers are sorted into [server 5, server 4, server 3, server 2, server 1] based on the priority scores. It can be seen that server 5 is the intermediate server having the highest priority, and server 5 has optimal performance metrics. Therefore, server 5 is preferentially selected as the server.

An advantage of the embodiments is that scoring is performed on a plurality of performance metrics in the server basic information of the intermediate servers, and a combination of the table lookup method and a function calculation method is also employed in the scoring, so that multi-dimensional scoring of the intermediate servers is implemented, the scoring dimensions have better comprehensiveness, and accuracy and rationality of the priority scores are improved.

Operation 320 is described in detail below.

In operation 320, when the type of the virtual machine is a first type, a processing resource entity architecture associated with the network interface card is acquired from the server. The first type indicates that the virtual machine is configured to cooperate with the network interface card.

In all embodiments of the present disclosure, the server may include a plurality of candidate resource entity architectures having candidate architecture indexes.

The candidate resource entity architecture refers to an internal CPU resource structure on the server, and the candidate resource entity architecture may alternatively be referred to as a physical CPU structure inside the server. Different candidate resource entity architectures may communicate with each other through an infinity fabric on-package (IFOP) protocol.

The candidate architecture index is configured for uniquely identifying a respective candidate resource entity architecture in the server, and candidate architecture indexes of different candidate resource entity architectures are different.

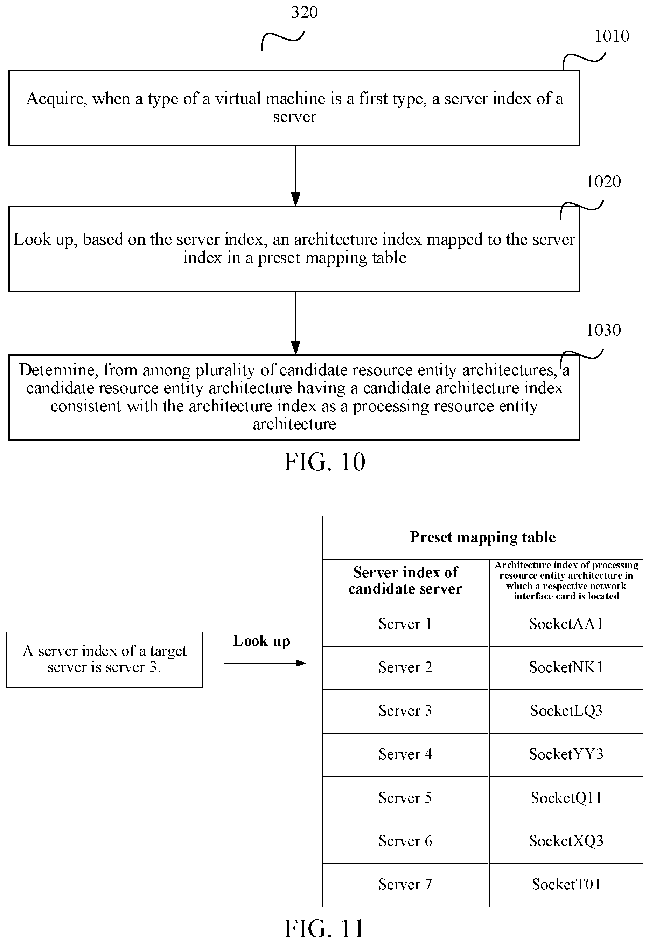

Referring to FIG. 10, in all embodiments of the present disclosure, a process of determining a server in which the virtual machine is located may include, but is not limited to, the following operations 1010 to 1030:

Operation 1010: Acquire, when the type of the virtual machine is the first type, a server index of a server.

Operation 1020: Look up, based on the server index, an architecture index mapped to the server index in a preset mapping table.

Operation 1030: Determine, from among the plurality of candidate resource entity architectures, a candidate resource entity architecture having a candidate architecture index consistent with the architecture index as the processing resource entity architecture.

Operations 1010 to 1030 are described in detail below.

In operation 1010, when the type of the virtual machine is the first type, a server index of a server is acquired.

The server index is configured for uniquely identifying the server. Each candidate server has a server index, and server indexes of different candidate servers are different.

In all embodiments of the present disclosure, when a type of the virtual machine is a first type, a server index of the server may be extracted from the server basic information of the server in a case where authorization is granted.

In operation 1020, based on the server index, an architecture index mapped to the server index is looked up in a preset mapping table.

The preset mapping table is configured for indicating a candidate architecture index of a candidate resource entity architecture inside each candidate server in which a respective network interface card is located.

The architecture index is configured for identifying a candidate resource entity architecture inside the server in which the network interface card is located.

In all embodiments of the present disclosure, a server index of the server may be compared with server indexes of the plurality of candidate servers in the preset mapping table. Then, a candidate architecture index of a candidate server in the preset mapping table is determined as the architecture index, where a server index of the candidate server is consistent with the server index of the server.

In operation 1030, for the server, among a plurality of candidate resource entity architectures, a candidate architecture index of each candidate resource entity architecture is compared with the architecture index mapped to the server index of the server. Then, if a candidate architecture index of a candidate resource entity architecture is consistent with the architecture index, indicating that the network interface card of the server is located in the candidate resource entity architecture, the candidate resource entity architecture having the candidate architecture index consistent with the architecture index is determined as the processing resource entity architecture.

As shown in FIG. 11, the preset mapping table records server indexes of seven candidate servers and architecture indexes of processing resource entity architectures in which network interface cards are located. A candidate server having a server index of server 1 corresponds to an architecture index of SocketAA1. A candidate server having a server index of server 2 corresponds to an architecture index of SocketNK1. A candidate server having a server index of server 3 corresponds to an architecture index of SocketLQ3. A candidate server having a server index of server 4 corresponds to an architecture index of SocketYY3. A candidate server having a server index of server 5 corresponds to an architecture index of SocketQ11. A candidate server having a server index of server 6 corresponds to an architecture index of SocketXQ3. A candidate server having a server index of server 7 corresponds to an architecture index of SocketT01. Based on this, when the server index of the server is server 3, an architecture index of the processing resource entity architecture in which the network interface card of the server is located may be queried from the preset mapping table, the architecture index being SocketLQ3.

An advantage of the embodiments is that a preset mapping table is constructed to record locations of network interface cards of candidate servers inside the candidate servers, and the preset mapping table has mapping relationships between server indexes of the candidate servers and candidate architecture indexes of candidate resource entity architectures in which the network interface cards are located stored therein, so that, when creating the virtual machine, the mapping relationships may be relied on to preferentially select candidate resource entity architectures in which the network interface cards are located as processing resource entity architectures for providing processing resources, and to preferentially deploy the virtual machine on the processing resource entity architectures. This approach may effectively shorten a transmission path between the virtual machine and the network interface card, and avoid issues of low network speed and access bandwidth caused by deploying the virtual machine and the network interface card in different resource entity architectures, thereby improving efficiency in network request forwarding of the virtual machine.

Operation 340 is described in detail below.

In operation 340, a processing resource entity is determined from the processing resource entity architecture based on the resource information.

In all embodiments of the present disclosure, the processing resource entity architecture may include a plurality of candidate resource entity levels.

The candidate resource entity levels indicate a hierarchical structure of the processing resource entity architecture. There is a subordinate relationship or a nested relationship among the plurality of candidate resource entity levels.

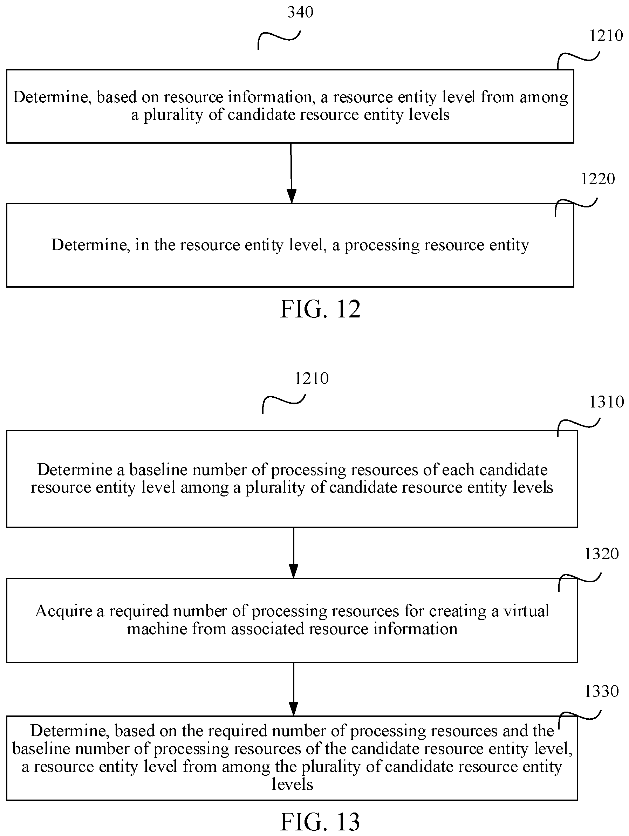

Referring to FIG. 12, in all embodiments of the present disclosure, operation 340 may include the following operations 1210 to 1220:

Operation 1210: Determine, based on the resource information, a resource entity level from among the plurality of candidate resource entity levels.

Operation 1220: Determine, in the resource entity level, the processing resource entity.

Operations 1210 to 1220 are described in detail below.

In operation 1210, a resource entity level is determined from among the plurality of candidate resource entity levels based on the resource information.

The resource entity level is configured for indicating a level position inside the server at which the virtual machine is located after creation.

For brevity, in all embodiments of the present disclosure, a specific process of determining a resource entity level from among the plurality of candidate resource entity levels will be described in detail below, and details are not repeated herein.

In operation 1220, the processing resource entity may be determined from the resource entity level.

In all embodiments of the present disclosure, the resource entity level may include more than one candidate processing resource entity capable of providing processing resources, and different candidate processing resource entities have some differences in the number of processing resources that may be provided. Based on this, in consideration of reducing a degree of resource fragmentation of the resource entity level, a candidate processing resource entity capable of providing processing resources for creating the virtual machine and keeping the resource entity level in a relatively complete state after the virtual machine is created on the candidate processing resource entity is selected from the resource entity level, and the candidate processing resource entity is used as the processing resource entity.

An advantage of the embodiments is that, based on the resource information, a resource entity level may be determined from among a plurality of candidate resource entity levels, so that the virtual machine may be created, to the extent possible, on an exactly suitable resource entity level according to actual processing resource requirements, thereby avoiding issues of insufficient bandwidth or excessively low access efficiency caused by crossing resource entity levels. Further, when determining the processing resource entity, in consideration of the issue of resource fragmentation, a candidate processing resource entity capable of providing processing resources for creating the virtual machine and maintaining processing resources of the server in a relatively organized state is selected as the processing resource entity to the extent possible, thereby improving rationality of resource allocation during virtual machine creation.

Referring to FIG. 13, in all embodiments of the present disclosure, operation 1210 may include the following operations 1310 to 1330:
Operation 1310: Determine a baseline number of processing resources of each candidate resource entity level among the plurality of candidate resource entity levels.

Operation 1320: Acquire a required number of processing resources for creating the virtual machine from the resource information.

Operation 1330: Determine, based on the required number of processing resources and the baseline number of processing resources of the candidate resource entity level, the resource entity level from among the plurality of candidate resource entity levels.

Operations 1310 to 1330 are described in detail below.

In operation 1310, a baseline number of processing resources of each candidate resource entity level is determined.

The baseline number of processing resources is configured for indicating a maximum number of processing resources that the candidate resource entity level is capable of providing for creating the virtual machine.

In all embodiments of the present disclosure, each candidate resource entity level may include a plurality of candidate processing resource entities.

The candidate processing resource entity refers to a module distributed in the candidate resource entity level and capable of providing resources for creating the virtual machine.

In all embodiments of the present disclosure, operation 1310 may include, but is not limited to, the following operations:
acquiring, for each candidate resource entity level, a number of candidate processing resources of each candidate processing resource entity among the plurality of candidate processing resource entities in the candidate resource entity level; and
determining the maximum number of candidate processing resources as the baseline number of processing resources of the candidate resource entity level.

The number of candidate processing resources is configured for indicating a maximum number of processing resources that each candidate processing resource entity distributed in the candidate resource entity level is capable of providing for creating the virtual machine.

In all embodiments of the present disclosure, for each candidate resource entity level, statistics on processing resources of each candidate processing resource entity in the candidate resource entity level may be collected, to obtain the maximum number of processing resources that each candidate processing resource entity is capable of providing for creating the virtual machine. Then, the maximum number capable of being provided for creating the virtual machine is used as the number of candidate processing resources of the candidate processing resource entity.

An advantage of the embodiment is that, by acquiring a number of candidate processing resources of each candidate processing resource entity in the candidate resource entity level, the maximum number of candidate processing resources is determined as the baseline number of processing resources of the candidate resource entity level, so as to reflect a capability of the candidate resource entity level, thereby facilitating creation of the virtual machine, to the extent possible, on an exactly suitable resource entity level based on the baseline number of processing resources, avoiding issues of insufficient bandwidth or excessively low access efficiency caused by crossing resource entity levels, and improving rationality of resource allocation during virtual machine creation.

In operation 1320, a required number of processing resources for creating the virtual machine is acquired from the resource information.

The required number of processing resources is configured for indicating an amount of processing resources required for creating the virtual machine.

In all embodiments of the present disclosure, specific details of various resources required for creating the virtual machine may be recorded in the resource information. Therefore, information extraction may be performed on the resource information to acquire the required number of processing resources for creating the virtual machine.

The required number of processing resources may be the number of CPU cores required for creating the virtual machine, and the like.

In operation 1330, based on the required number of processing resources and the baseline number of processing resources of each candidate resource entity level among the plurality of candidate resource entity levels, the resource entity level is determined from among the plurality of candidate resource entity levels.

In all embodiments of the present disclosure, operation 1330 may include, but is not limited to, the following operations:
comparing the required number of processing resources with the baseline number of processing resources of the candidate resource entity level; and
determining, from among the plurality of candidate resource entity levels, the candidate resource entity level having the baseline number of processing resources greater than the required number of processing resources and having a lowest level rank as the resource entity level.

In all embodiments of the present disclosure, baseline numbers of processing resources of the candidate resource entity levels may be compared. Then, from among the plurality of candidate resource entity levels, the candidate resource entity level having the baseline number of processing resources greater than the required number of processing resources and having a lowest level rank is determined as the resource entity level.

For example, a rule followed by the foregoing determination of the resource level is defined as a lowest level rule. Specifically, the required number of processing resources for creating the virtual machine (the number of CPU cores) is denoted as N. N is an integer greater than 0. The processing resource entity architecture includes a Socket level, a CCD level, and a CCX level. The Socket level is higher than the CCD level, and the CCD level is higher than the CCX level. A baseline number of processing resources of the Socket level is denoted as Socket CPUs. A baseline number of processing resources of the CCD level is denoted as CCD CPUs. A baseline number of processing resources of the CCX level is denoted as CCX CPUs. Socket CPUs, CCD CPUs, and CCX CPUs are integers greater than 0, Socket CPUs is greater than or equal to CCD CPUs, and CCD CPUs is greater than or equal to CCX CPUs. Based on this, when N is less than or equal to CCX CPUs, the resource entity level is determined as the CCX level. When N is less than or equal to CCD CPUs and N is greater than CCX CPUs, the resource entity level is determined as the CCD level. When N is less than or equal to Socket CPUs and N is greater than CCD CPUs, the resource entity level is determined as the Socket level. In particular, when N is greater than Socket CPUs, a single processing resource entity architecture fails to satisfy processing resources required for creating the virtual machine. Therefore, the resource entity level is determined as the server as a whole, and the processing resource entity architecture and other candidate processing resource entity architectures in the server are all configured for providing processing resources required for creating the virtual machine.

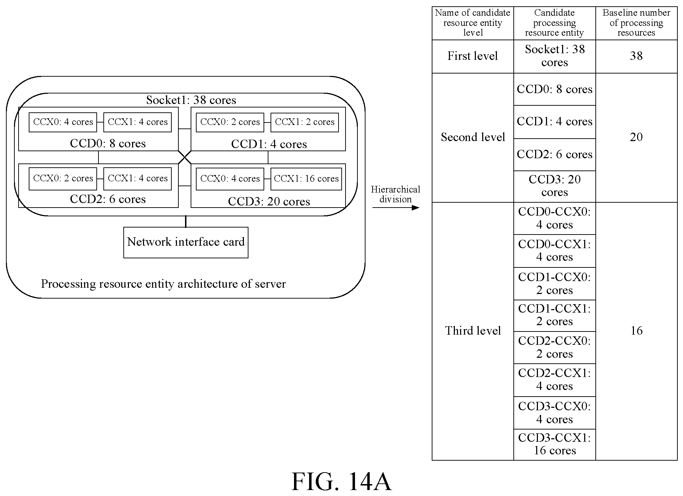

As shown in FIG. 14A, a processing resource entity architecture inside the server in which a network interface card is located is Socket1 having CPU resources of 38 cores. Socket1 is an architecture index of the processing resource entity architecture. The processing resource entity architecture has three levels, and the highest candidate resource entity level in the processing resource entity architecture is the Socket level. The processing resource entity architecture Socket1 includes four CCD structures, namely, a structure CCD0 having CPU resources of 8 cores, a structure CCD1 having CPU resources of 4 cores, a structure CCD2 having CPU resources of 6 cores, and a structure CCD3 having CPU resources of 20 cores. Further, the structure CCD0 includes two sub-structures, namely, a structure CCX0 having CPU resources of 4 cores, and a structure CCX1 having CPU resources of 4 cores. The structure CCD1 includes two sub-structures, namely, a structure CCX0 having CPU resources of 2 cores, and a structure CCX1 having CPU resources of 2 cores. The structure CCD2 includes two sub-structures, namely, a structure CCX0 having CPU resources of 2 cores, and a structure CCX1 having CPU resources of 4 cores. The structure CCD3 includes two sub-structures, namely, a structure CCX0 having CPU resources of 4 cores, and a structure CCX1 having CPU resources of 16 cores. Based on this, hierarchical division is performed on the entire processing resource entity architecture Socket1. The processing resource entity architecture Socket1 may be divided into a first level, a second level, and a third level that are successively smaller, that is, the candidate resource entity levels include the first level, the second level, and the third level. The highest candidate resource entity level (the first level) includes one candidate processing resource entity, and the candidate processing resource entity is Socket1 having CPU resources of 38 cores. The second level has four candidate processing resource entities, namely, a candidate processing resource entity CCD0 having CPU resources of 8 cores, a candidate processing resource entity CCD1 having CPU resources of 4 cores, a candidate processing resource entity CCD2 having CPU resources of 6 cores, and a candidate processing resource entity CCD3 having CPU resources of 20 cores. The third level includes eight candidate processing resource entities, namely, a candidate processing resource entity CCD0-CCX0 (the structure CCX0 in the structure CCD0 of the candidate processing resource entity) having CPU resources of 4 cores, a candidate processing resource entity CCD0-CCX1 having CPU resources of 4 cores, a candidate processing resource entity CCD1-CCX0 having CPU resources of 2 cores, a candidate processing resource entity CCD1-CCX1 having CPU resources of 2 cores, a candidate processing resource entity CCD2-CCX0 having CPU resources of 2 cores, a candidate processing resource entity CCD2-CCX1 having CPU resources of 4 cores, a candidate processing resource entity CCD3-CCX0 having CPU resources of 4 cores, and a candidate processing resource entity CCD3-CCX1 having CPU resources of 16 cores. Based on this, according to CPU resources capable of being provided by each candidate processing resource entity at each level, the baseline number of processing resources of the first level is determined as 38; the baseline number of processing resources of the second level is determined as 20; and the baseline number of processing resources of the third level is determined as 16.

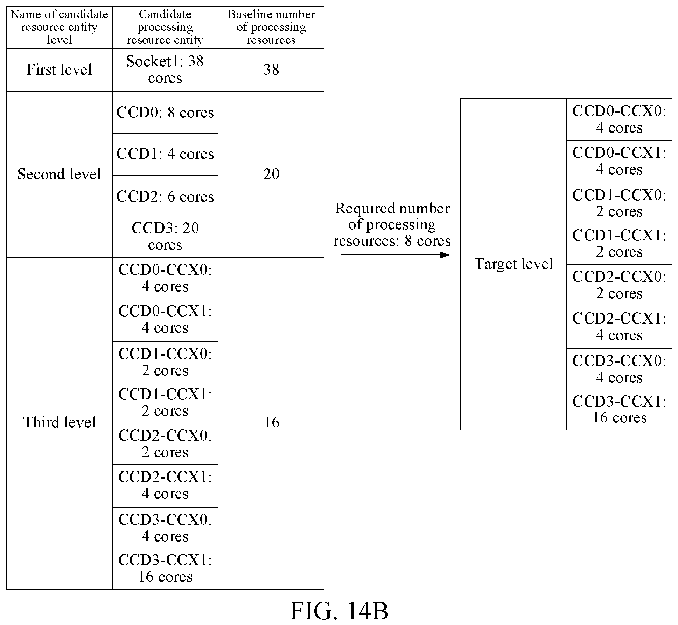

As shown in FIG. 14B, after the baseline numbers of processing resources of the first level, the second level, and the third level are determined, when the required number of processing resources of the virtual machine is 8 cores, since 8 is less than 16, the virtual machine may be created by using the processing resources provided by the candidate processing resource entities at the third level. Therefore, the third level (CCX level) is used as the target level, and a processing resource entity may be screened from among the eight candidate processing resource entities at the CCX level.

An advantage of the embodiments is that, when determining a resource entity level from among a plurality of candidate resource entity levels, the maximum number of processing resources (the baseline number of processing resources) that each candidate resource entity level is capable of providing and the required number of processing resources for creating the virtual machine are first determined. Through comparison between the baseline number of processing resources and the required number of processing resources, a candidate resource entity level having a lowest level rank and capable of satisfying the required processing resources is preferentially selected as the resource entity level, so that a minimum resource unit level may be selected, and the virtual machine is deployed, to the extent possible, on a suitable topology level (resource entity level), thereby avoiding access performance issues caused by crossing resource entity levels or resource entities (for example, crossing CCDs or crossing CCXs), and improving rationality of resource allocation during virtual machine creation.

An advantage of the embodiment shown in FIG. 13 is that not only is the resource information used to determine the resource entity level from among the plurality of candidate resource entity levels, but also the baseline number of processing resources of each candidate resource entity level and the required number of processing resources acquired based on the resource information are used in combination to determine the resource entity level from among the plurality of candidate resource entity levels. Therefore, the virtual machine may be created on a suitable resource entity level according to actual processing resource requirements, thereby avoiding issues of insufficient bandwidth or excessively low access efficiency caused by crossing resource entity levels.

In all embodiments of the present disclosure, the resource entity level may include a plurality of candidate processing resource entities.

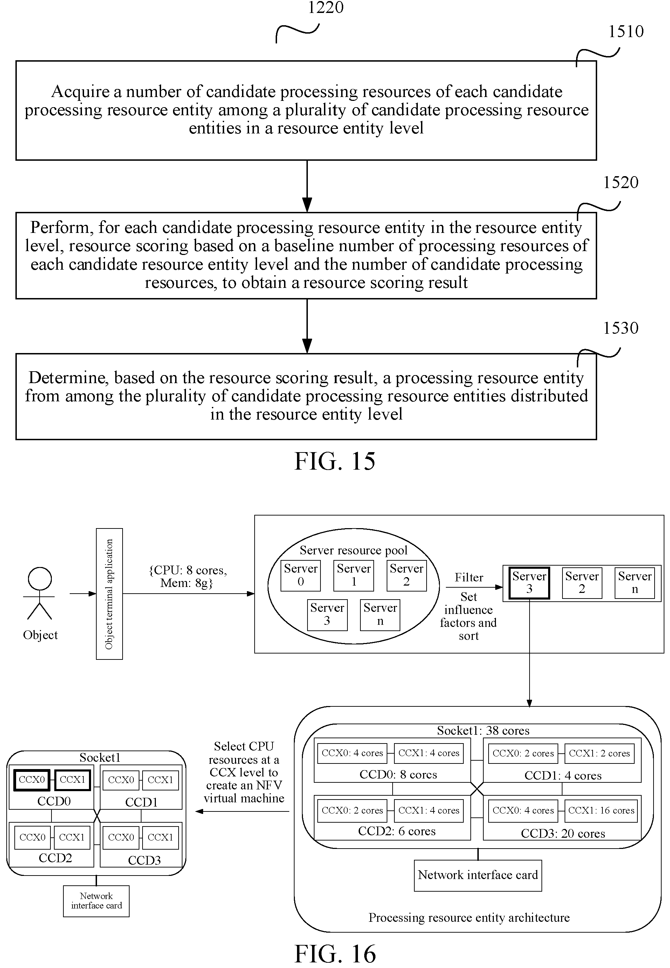

Referring to FIG. 15, in all embodiments of the present disclosure, operation 1220 may include the following operations 1510 to 1530:
Operation 1510: Acquire a number of candidate processing resources of each candidate processing resource entity among the plurality of candidate processing resource entities in the resource entity level.

Operation 1520: Perform, for each candidate processing resource entity in the resource entity level, resource scoring based on the baseline number of processing resources of each candidate resource entity level and the number of candidate processing resources of the candidate processing resource entity, to obtain a resource scoring result.

Operation 1530: Determine, based on the resource scoring result, the processing resource entity from among the plurality of candidate processing resource entities in the resource entity level.

Operations 1510 to 1530 are described in detail below.

In operation 1510, a number of candidate processing resources of each candidate processing resource entity among the plurality of candidate processing resource entities in the resource entity level is acquired.

The number of candidate processing resources is configured for indicating a maximum number of processing resources that each candidate processing resource entity distributed in the resource entity level is capable of providing for creating the virtual machine.

In all embodiments of the present disclosure, a specific process of operation 1510 may be similar to the specific process of acquiring a number of candidate processing resources of each candidate processing resource entity in the candidate resource entity level in operation 1310. For brevity, details are not repeated.

In operation 1520, for each candidate processing resource entity among the plurality of candidate processing resource entities in the resource entity level, resource scoring is performed based on the baseline number of processing resources of the resource entity level and the number of candidate processing resources of the candidate processing resource entity, to obtain a resource scoring result.

The resource scoring result is configured for indicating a degree of suitability of the candidate processing resource entity as a carrier for providing processing resources for creating the virtual machine.

In all embodiments of the present disclosure, operation 1520 may include, but is not limited to, the following operations:
determining, based on the baseline number of processing resources and the number of candidate processing resources, a processing resource margin of the candidate processing resource entity and an idle processing resource status of the server; and
performing resource scoring based on the processing resource margin and the idle processing resource status, to obtain the resource scoring result.

The processing resource margin is configured for indicating a number of remaining processing resources of the candidate processing resource entity after processing resources of the candidate processing resource entity are used to create the virtual machine. The idle processing resource status is configured for indicating a degree of fragmentation of idle processing resources inside the server after processing resources of the candidate processing resource entity are used to create the virtual machine.

In all embodiments of the present disclosure, for each candidate processing resource entity among the plurality of candidate processing resource entities in the resource entity level, a difference calculation may be performed on the baseline number of processing resources of the resource entity level and the number of candidate processing resources of the candidate processing resource entity, to calculate a processing resource margin of the candidate processing resource entity. Then, on the assumption that the candidate processing resource entity is used to create the virtual machine, a degree of fragmentation of idle processing resources on each candidate processing resource entity inside the server after processing resources of the candidate processing resource entity are used to create the virtual machine is calculated. Further, the processing resource margin is substituted into a first scoring function, and an output of the first scoring function is used as a first resource score. The first scoring function is a decreasing function taking the processing resource margin as an independent variable and the first resource score as a dependent variable, and the larger the processing resource margin is, the smaller the first resource score is, so as to favor utilizing the processing resources of the candidate processing resource entity to the fullest extent for creating the virtual machine. Similarly, for the degree of fragmentation of the idle processing resources on the candidate processing resource entities, the idle processing resource status is inputted into a second scoring function, and the second scoring function outputs a second resource score. The second scoring function is a decreasing function taking the idle processing resource status as an independent variable and the second resource score as a dependent variable, and the larger the degree of fragmentation indicated by the idle processing resource status is, the smaller the second resource score is, so as to minimize, to the extent possible, the degree of resource fragmentation of the server after processing resources of the candidate processing resource entity are used to create the virtual machine. Since there are a plurality of idle processing resource statuses, there are also a plurality of second resource scores. The plurality of second resource scores are averaged, to obtain a mean of the second resource scores. Finally, the first resource score and the mean of the second resource scores are averaged, to obtain a resource scoring result. Thus, during resource scoring, two aspects may be taken into account: using, to the extent possible, processing resources of the candidate processing resource entity for creating the virtual machine, and minimizing a degree of resource fragmentation after the virtual machine is created, facilitating improvement of rationality of screening processing resource entities.

In operation 1530, based on the resource scoring result, the processing resource entity is determined from among the plurality of candidate processing resource entities distributed in the resource entity level.

In all embodiments of the present disclosure, the resource scoring results of the plurality of candidate processing resource entities distributed in the resource entity level may be compared. Then, based on the comparison, a candidate processing resource entity having a maximum resource scoring result is selected as the processing resource entity.

As shown in FIG. 16, when an object intends to create the virtual machine, the object first configures, on an object terminal application, that a number of CPU cores required for creating the virtual machine is 8 and an internal memory size is 8G. Then, a virtual machine creation server performs filtering, sets influence factors, and sorts a plurality of candidate servers in a server resource pool based on processing resource parameters configured by the object, so as to obtain a server sequence capable of providing processing resources required for creating the virtual machine. In the server sequence, a server 3, a server 2, and a server n are arranged in sequence. Based on this, the server 3 ranked first in the server sequence is determined as the server on which the virtual machine is to be deployed. A specific process of performing filtering, setting influence factors, and sorting a plurality of candidate servers in the server resource pool is similar to the foregoing operations 510 to 540. Further, a processing resource entity architecture inside the server 3 in which a network interface card is located is Socket1 having CPU resources of 38 cores. The processing resource entity architecture Socket1 includes four CCD structures, and each CCD structure includes two CCX structures. Specifically, the four CCD structures are: CCD0 having CPU resources of 8 cores, CCD1 having CPU resources of 4 cores, CCD2 having CPU resources of 6 cores, and CCD3 having CPU resources of 20 cores. The structure CCD0 includes CCX0 having CPU resources of 4 cores (denoted as candidate processing resource entity CCD0-CCX0) and CCX1 having CPU resources of 4 cores (denoted as candidate processing resource entity CCD0-CCX1). The structure CCD1 includes CCX0 having CPU resources of 2 cores (denoted as candidate processing resource entity CCD1-CCX0) and CCX1 having CPU resources of 2 cores (denoted as candidate processing resource entity CCD1-CCX1). The structure CCD2 includes CCX0 having CPU resources of 2 cores (denoted as candidate processing resource entity CCD2-CCX0) and CCX1 having CPU resources of 4 cores (denoted as candidate processing resource entity CCD2-CCX1). The structure CCD3 includes CCX0 having CPU resources of 4 cores (denoted as candidate processing resource entity CCD3-CCX0) and CCX1 having CPU resources of 16 cores (denoted as candidate processing resource entity CCD3-CCX1). When candidate processing resource entity CCD3-CCX1 is used to create the virtual machine, complete CPU resources of 16 cores are split into two CPU resources of 8 cores, causing the server to fail to satisfy needs of tasks requiring CPU resources of 16 cores, and deepening a degree of server resource fragmentation. When CCX0 or CCX1 belonging to different CCD structures is combined to provide processing resources required for the virtual machine, a problem of crossing CCD structures is caused, and there are defects of excessively low access speed or insufficient bandwidth. When two CCX structures of the structure CCD2 or two CCX structures in CCD1 are used as candidate processing resource entities for providing processing resources, provided processing resources are insufficient. Therefore, candidate processing resource entity CCD0-CCX0 and candidate processing resource entity CCD0-CCX1 in the structure CCD0 are preferentially selected to jointly provide processing resources required for creating the virtual machine. In this way, while processing resources in the structure CCD0 are completely used, processing resources of other candidate processing resource entities in the server remain, to the greatest extent possible, complete or organized.

An advantage of the embodiments is that, when determining the processing resource entity, in consideration of the problem of resource fragmentation, resource scoring is employed to calculate a degree of fragmentation of processing resources in the server when processing resources in the candidate processing resource entity are used to create the virtual machine, so as to select, to the extent possible, a candidate processing resource entity capable of providing processing resources for creating the virtual machine and maintaining processing resources of the server in a relatively contiguous state as the processing resource entity, thereby improving rationality of resource allocation during virtual machine creation.

A process of creating a virtual machine of a type other than the first type in all embodiments of the present disclosure is described in detail below.

In practical applications, virtual machines to be created may be of other types in addition to the first type, for example, a virtual machine requiring use of a server as a whole to provide processing resources and cooperating with the network interface card, or an ordinary virtual machine not used for implementing network request forwarding and not configured to cooperate with the network interface card. Based on this, the embodiments of the present disclosure further provide a solution for creating a virtual machine of a type other than the first type, so as to improve universality of virtual machine creation and satisfy virtual machine creation requirements in various scenarios.

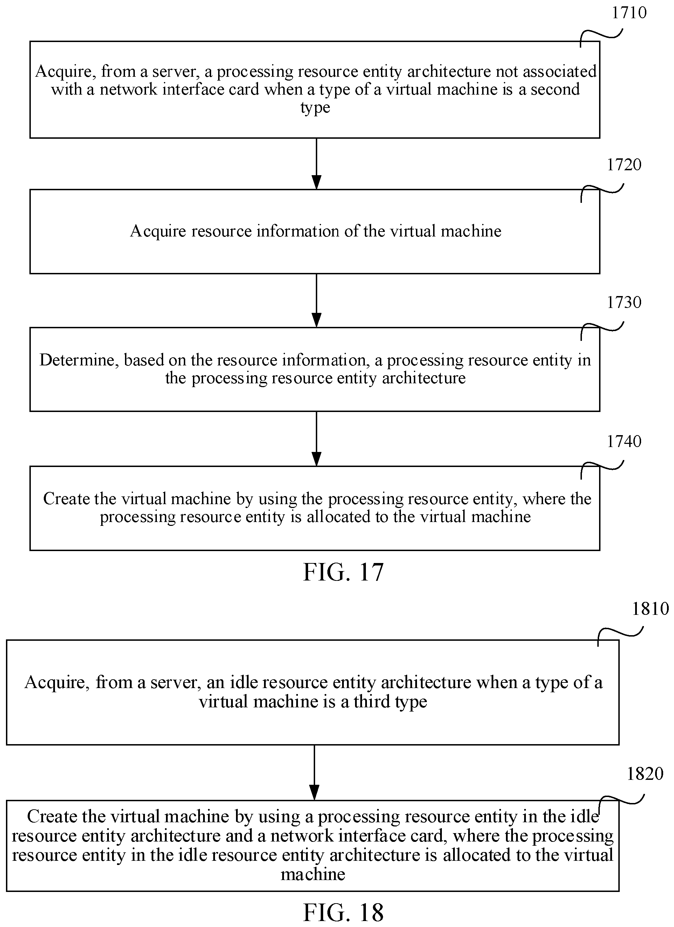

Referring to FIG. 17, in all embodiments of the present disclosure, after a server for creating the virtual machine is determined, the method for creating the virtual machine may further include the following operations 1710 to 1740:
Operation 1710: Acquire, from the server, a processing resource entity architecture not associated with a network interface card when the type of the virtual machine is a second type.

Operation 1720: Acquire resource information for the virtual machine.

Operation 1730: Determine, based on the resource information, a processing resource entity in the processing resource entity architecture.

Operation 1740: Create the virtual machine by using the processing resource entity, where the processing resource entity is allocated to the virtual machine.

Operations 1710 to 1740 are described in detail below.

In operation 1710, when the type of the virtual machine is the second type, a processing resource entity architecture not associated with a network interface card is acquired from the server.

The second type indicates that the virtual machine is not configured to cooperate with the network interface card.

In all embodiments of the present disclosure, a specific process of operation 1710 may be similar to the foregoing operation 320. For brevity, details are not repeated.

In operations 1720 to 1740, specific processes of operations 1720 to 1740 are similar to the foregoing operations 330 to 350. For brevity, details are not repeated.

An advantage of the embodiments is that, for an ordinary virtual machine (a virtual machine of the second type) not used for implementing network request forwarding and not configured to cooperate with the network interface card, a candidate processing resource entity architecture in which the network interface card is not located is preferentially selected inside the server as a processing resource entity architecture for providing processing resources required for creating the virtual machine. In this way, processing resources on the candidate processing resource entity architecture in which the network interface card is located may be configured for creating a virtual machine of the first type, thereby effectively improving rationality of allocation and utilization efficiency of CPU resources inside the server. Meanwhile, when creating the virtual machine of the second type, screening of a plurality of candidate resource entity levels and screening of candidate processing resource entities at the resource entity level are also employed, so that regularity of resource allocation is achieved, and after the virtual machine is created, processing resources on the processing resource entity architecture not associated with the network interface card have better completeness, and a degree of resource fragmentation is reduced. This approach satisfies creation of ordinary virtual machines, improves universality of virtual machine creation, and satisfies virtual machine creation requirements in various scenarios.

Referring to FIG. 18, in all embodiments of the present disclosure, after a server for creating the virtual machine is determined, the method for creating the virtual machine may further include the following operations 1810 to 1820:
Operation 1810: Acquire, from the server, an idle resource entity architecture when the type of the virtual machine is a third type.

Operation 1820: Create the virtual machine by using a processing resource entity in the idle resource entity architecture and the network interface card, where the processing resource entity in the idle resource entity architecture is allocated to the virtual machine.

Operations 1810 to 1820 are described in detail below.

In operation 1810, when the type of the virtual machine is a third type, an idle resource entity architecture is acquired from the server.

The third type indicates that creating the virtual machine requires overall resources of the server, and that the virtual machine is configured to cooperate with the network interface card.

The idle resource entity architecture refers to a candidate processing resource entity architecture having unused processing resources on the server.

In all embodiments of the present disclosure, a specific process of operation 1810 may be similar to the foregoing operation 320. For brevity, details are not repeated.

In operation 1820, the virtual machine is created by using a processing resource entity in the idle resource entity architecture and the network interface card, where the processing resource entity in the idle resource entity architecture is allocated to the virtual machine.

In all embodiments of the present disclosure, a specific process of operation 1820 may be similar to the foregoing operations 330 to 350. For brevity, details are not repeated.

An advantage of the embodiments is that, for an ordinary virtual machine (a virtual machine of the third type) requiring use of a server as a whole to implement network request forwarding and being configured to cooperate with the network interface card, all unused processing resources of the server are directly provided for creating the virtual machine. During creation, screening of a plurality of candidate resource entity levels and screening of candidate processing resource entities at the resource entity level are also employed, so that after the virtual machine is created, processing resources on each candidate processing resource entity architecture inside the server have better completeness, and a degree of resource fragmentation of the server is reduced. This approach satisfies creation of virtual machines requiring use of a server as a whole to implement network request forwarding and being configured to cooperate with the network interface card, improves universality of virtual machine creation, and satisfies virtual machine creation requirements in various scenarios.

A process of performing pre-configurations for each candidate server according to all embodiments of the present disclosure is described in detail below.

Server basic information and other related data of candidate servers may be required in the above process of creating the virtual machine. In order to improve creation efficiency of the virtual machine and rationality of resource allocation, the embodiments of the present disclosure provide a solution for collecting and storing related data of each candidate server before executing a virtual machine creation process, so as to improve efficiency in acquiring data and querying data in a virtual machine creation stage.

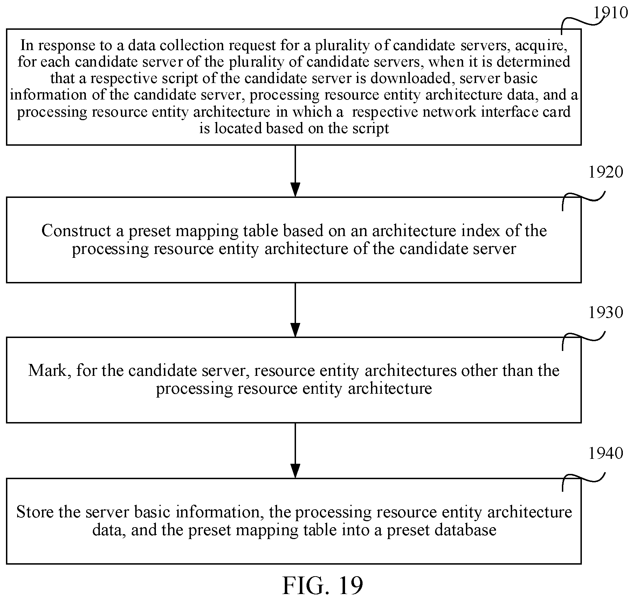

Referring to FIG. 19, in all embodiments of the present disclosure, before the determining a server in which the virtual machine is located, the method for creating the virtual machine further includes the following operations 1910 to 1940:
Operation 1910: In response to a request for collecting data (hereinafter also called data collection request) for a plurality of candidate servers, acquire, for each candidate server of the plurality of candidate servers, when it is determined that a respective script for the candidate server is downloaded, the server basic information of the candidate server, processing resource entity architecture data, and the processing resource entity architecture in which a respective network interface card is located based on the script.

Operation 1920: Construct a preset mapping table based on an architecture index of the processing resource entity architecture of each candidate server among the plurality of candidate servers.

Operation 1930: Mark, for the candidate server, resource entity architectures other than the processing resource entity architecture.

Operation 1940: Store the server basic information, the processing resource entity architecture data, and the preset mapping table into a preset database.

Operations 1910 to 1940 are described in detail below.

In operation 1910, in response to a data collection request for a plurality of candidate servers, when it is determined that a respective script for each candidate server of the plurality of candidate servers is downloaded, the server basic information of the candidate server, processing resource entity architecture data, and the processing resource entity architecture in which a respective network interface card is located are acquired based on the script.

The data collection request refers to a request triggered when collecting server data of each candidate server before creating the virtual machine.

The script refers to a series of script codes related to creating the virtual machine. The script includes, but is not limited to, a data collection script for collecting server data of each candidate server, and the like.

The processing resource entity architecture data indicates a specific hierarchical structure of a respective candidate resource entity architecture included inside the candidate server, and processing resources included in candidate processing resource entities at each candidate resource entity level in the specific hierarchical structure.

In all embodiments of the present disclosure, when data collection is to be performed for each candidate server, a data collection event may be triggered. Based on this, in response to a data collection request, the candidate servers first perform detection on a respective script related to data collection execution. When it is determined that a script is downloaded by a candidate server, various server data may be collected by executing the script, the various server data including server basic information, processing resource entity architecture data, and the processing resource entity architecture in which the network interface card is located.

In operation 1920, a preset mapping table is constructed based on an architecture index of the processing resource entity architecture of each candidate server.

In all embodiments of the present disclosure, operation 1920 may include, but is not limited to, the following operations:
acquiring, for each candidate server of the plurality of candidate servers, a server index of the candidate server;
determining the server index as a key, determining the architecture index as a value, and generating a key-value pair based on the key and the value; and
generating the preset mapping table based on the key-value pairs of the plurality of candidate servers.

In all embodiments of the present disclosure, for each candidate server, a server index of the candidate server may be acquired from server basic information. Next, the server index is determined as a key, the architecture index of the processing resource entity architecture in which a network interface card is located is determined as a value, and a key-value pair of the candidate server is constructed. Further, the key-value pairs of the plurality of candidate servers are stored as a key-value pair table, and the key-value pair table is used as the preset mapping table.

In operation 1930, for the candidate server, resource entity architectures other than the processing resource entity architecture are marked.

In all embodiments of the present disclosure, for each of the candidate servers, resource entity architectures other than the processing resource entity architecture in the candidate server may be marked by using a preset identifier, so as to distinguish the processing resource entity architecture in which the network interface card is located from other resource entity architectures, thereby improving efficiency in acquiring, in a virtual machine creation stage, the processing resource entity architecture in which the network interface card is located from the server.

In operation 1940, the server basic information, the processing resource entity architecture data, and the preset mapping table are stored in a preset database.

The preset database refers to a data space that may provide data storage. A storage space size of the preset database is fixed.

In all embodiments of the present disclosure, for each candidate server, server basic information and processing resource entity architecture data of the candidate server may be integrated into a data block, and the data block is stored in the preset database, so that related data of the candidate servers may be stored in blocks. In addition, the preset mapping table is directly stored in the preset database, so as to use the preset mapping table to indicate a correspondence relationship between each candidate server and the processing resource entity architecture inside the candidate server in which a respective network interface card is located.

An advantage of the embodiments is that, before executing a virtual machine creation process, related data of the candidate servers is collected and stored, and a mapping relationship between the server index and the architecture index of the processing resource entity architecture inside the candidate server in which the network interface card is located is stored in a form of a key-value pair table, so as to improve efficiency and accuracy in determining the processing resource entity architecture in which the network interface card is located in a virtual machine creation stage. In addition, server basic information and processing resource entity architecture data are stored, so as to provide relatively reliable and comprehensive data references for determining the server, and improve accuracy in determining the server in a virtual machine creation stage.

An implementation of a method for creating a virtual machine according to all embodiments of the present disclosure are described below.

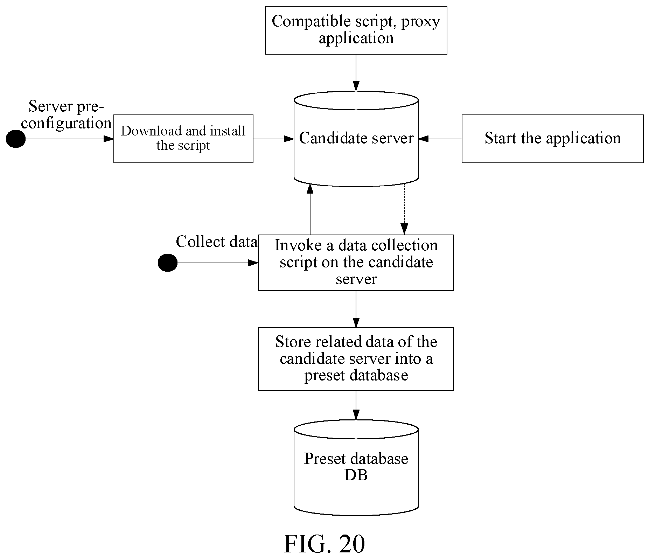

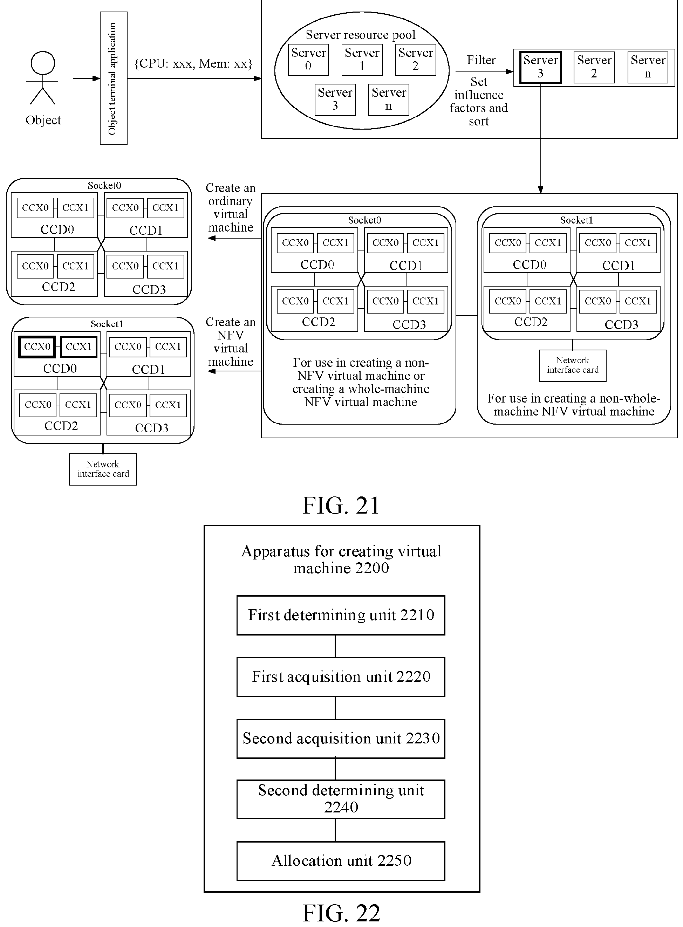

A specific implementation process of a method for creating a virtual machine according to all embodiments of the present disclosure will be described in detail with reference to FIG. 20 and FIG. 21.

FIG. 20 shows a specific implementation process of pre-configuring each candidate server before the virtual machine is created. Specifically, first, in response to triggering of a server pre-configuration process, a script and a proxy application compatible with the candidate server may be first determined. Then, the script is downloaded and installed to the candidate server, and a proxy application is started. Further, a data collection instruction is transmitted to the candidate server, and the candidate server, in response to the data collection instruction, invokes a data collection script on the candidate server to collect various server data of the candidate server. The server data includes a CPU topology of the candidate server, a processing resource entity architecture (Socket) in which the network interface card is located, and other information. Finally, related data of the candidate server is stored into the preset database DB, so as to complete a pre-configuration operation on the candidate server, a specific process thereof being similar to the foregoing operations 1910 to 1940. For brevity, details are not repeated.

As shown in FIG. 21, when an object intends to create the virtual machine, the object first configures, on an object terminal application, processing resource parameters such as a number of CPU cores required for creating the virtual machine and an internal memory size. Then, a virtual machine creation server performs filtering, sets influence factors, and sorts a plurality of candidate servers in a server resource pool based on processing resource parameters configured by the object, so as to obtain a server sequence capable of providing processing resources required for creating the virtual machine. In the server sequence, a server 3, a server 2, and a server n are arranged in sequence. Based on this, the server 3 ranked first in the server sequence is determined as the server on which the virtual machine is to be deployed. A specific process of performing filtering, setting influence factors, and sorting a plurality of candidate servers in the server resource pool is similar to the foregoing operations 510 to 540. Further, the server 3 includes two candidate resource entity architectures (a Socket1 in which the network interface card is located and a Socket0 in which the network interface card is not located). Processing resources of Socket1 in which the network interface card is located are used for creating a non-whole-machine NFV virtual machine, and processing resources of Socket0 in which the network interface card is not located are used for creating a whole-machine NFV virtual machine or a non-NFV virtual machine. Therefore, Socket1 in which the network interface card is located is used as the processing resource entity architecture. Then, since the processing resource entity architecture Socket1 includes four CCD structures and each CCD structure includes two CCX structures, it may be determined that the processing resource entity architecture Socket1 has three candidate resource entity levels (a Socket level, a CCD level, and a CCX level). Based on this, from among the plurality of candidate resource entity levels in the processing resource entity architecture Socket1, the CCX level is first determined as the resource entity level, a specific implementation process thereof being similar to the foregoing operations 1310 to 1330. Then, scoring is performed on each candidate processing resource entity at the CCX level, and a candidate processing resource entity CCX0 and a candidate processing resource entity CCX1 in a structure CCD0 are screened as processing resource entities based on a scoring result, a specific implementation process thereof being similar to the foregoing operations 1510 to 1530. Finally, the virtual machine (NFV virtual machine) is created based on processing resources in the processing resource entity, a specific implementation process thereof being similar to the foregoing operation 350. For brevity, details are not repeated.

An apparatus and a device of all embodiments of the present disclosure are described below.

Although the operations in the foregoing flowcharts are sequentially displayed as indicated by arrows, the operations are not necessarily executed sequentially in the order indicated by the arrows. Unless explicitly stated in the embodiments, there is no strict limitation on the execution order of these operations, and these operations may be executed in other orders. Moreover, at least some of the operations in the foregoing flowcharts may include multiple operations or stages. These operations or stages are not necessarily completed at the same time, but may be executed at different times. The execution order of these operations or stages is not necessarily sequential either, but may be executed in rotation or alternately with other operations or at least a part of operations or stages in other operations.

In all embodiments of the present disclosure, when relevant processing is required to be performed based on data related to object characteristics such as object attribute information or an attribute information set, permission or consent of the object may be first obtained. Moreover, collection, use, and processing of these data comply with relevant laws, regulations, and standards. In addition, when object attribute information is required to be acquired in an embodiment of this application, separate permission or separate consent of the object is obtained through means such as a pop-up window or jumping to a confirmation page. After separate permission or separate consent of the object is explicitly obtained, necessary object-related data used for enabling the embodiment of this application to operate normally is further acquired.

FIG. 22 is a schematic structural diagram of an apparatus for creating a virtual machine 2200 according to an embodiment of the present disclosure. The apparatus for creating the virtual machine 2200 includes:
a first determining unit 2210, configured to determine, in response to a creation request for creating the virtual machine, a server for creating the virtual machine, the server including a network interface card;
a first acquisition unit 2220, configured to acquire, from the server, a processing resource entity architecture associated with the network interface card when a type of the virtual machine is a first type, the first type indicating that the virtual machine is configured to cooperate with the network interface card;
a second acquisition unit 2230, configured to acquire resource information for the virtual machine;
a second determining unit 2240, configured to determine, based on the resource information, a processing resource entity in the processing resource entity architecture; and
a creation unit 2250, configured to create the virtual machine using the processing resource entity and the network interface card, where the processing resource entity is allocated to the virtual machine.

In all embodiments of the present disclosure, the processing resource entity architecture may include a plurality of candidate resource entity levels.

The second determining unit 2240 includes:
a first determining module (not shown), configured to determine, based on the resource information, a resource entity level from among the plurality of candidate resource entity levels; and
a second determining module (not shown), configured to determine, in the resource entity level, the processing resource entity.

In all embodiments of the present disclosure, the first determining module (not shown) may include:
a first determining sub-module (not shown), configured to determine a baseline number of processing resources of each candidate resource entity level among the plurality of candidate resource entity levels;
a first acquisition sub-module (not shown), configured to acquire a required number of processing resources for creating the virtual machine from the resource information; and
a second determining sub-module (not shown), configured to determine, based on the required number of processing resources and the baseline number of processing resources of the candidate resource entity level, the resource entity level from among the plurality of candidate resource entity levels.

In all embodiments of the present disclosure, the second determining sub-module (not shown) may be configured to:
compare the required number of processing resources with the baseline number of processing resources of the candidate resource entity level; and
determine, from among the plurality of candidate resource entity levels, the candidate resource entity level having the baseline number of processing resources greater than the required number of processing resources and having a lowest level rank as the resource entity level.

In all embodiments of the present disclosure, each candidate resource entity level may include a plurality of candidate processing resource entities.

The first determining sub-module (not shown) is configured to:
acquire, for each candidate resource entity level, a number of candidate processing resources of each candidate processing resource entity among the plurality of candidate processing resource entities in the candidate resource entity level; and
determine the maximum number of candidate processing resources as the baseline number of processing resources of the candidate resource entity level.

In all embodiments of the present disclosure, the resource entity level may include a plurality of candidate processing resource entities.

The second determining module (not shown) is configured to:
acquire a number of candidate processing resources of each candidate processing resource entity among the plurality of candidate processing resource entities in the resource entity level;
perform, for each candidate processing resource entity in the resource entity level, resource scoring based on the baseline number of processing resources of each candidate resource entity level and the number of candidate processing resources of the candidate processing resource entity, to obtain a resource scoring result; and
determine, based on the resource scoring result, the processing resource entity from among the plurality of candidate processing resource entities distributed in the resource entity level.

In all embodiments of the present disclosure, the performing resource scoring based on the baseline number of processing resources and the number of candidate processing resources, to obtain a resource scoring result may include:
determining, based on the baseline number of processing resources and the number of candidate processing resources, a processing resource margin of the candidate processing resource entity and an idle processing resource status of the server; and
performing resource scoring based on the processing resource margin and the idle processing resource status, to obtain the resource scoring result.

In all embodiments of the present disclosure, the first determining unit 2210 may include:
a first acquisition module (not shown), configured to acquire a plurality of candidate servers;
a second acquisition module (not shown), configured to acquire, in response to a creation request for creating the virtual machine, virtual machine configuration information and resource information for the virtual machine; and
a third determining module (not shown), configured to determine, based on the virtual machine configuration information and the resource information, a server from among the plurality of candidate servers.

In all embodiments of the present disclosure, the third determining module (not shown) may include:
a second acquisition sub-module (not shown), configured to acquire server basic information of each candidate server among the plurality of candidate servers;
a screening sub-module (not shown), configured to screen, based on the virtual machine configuration information, the resource information, and the server basic information, intermediate servers from among the plurality of candidate servers;
a third determining sub-module (not shown), configured to determine, for each intermediate server among the screened intermediate servers, a priority score of the intermediate server based on the server basic information; and
a fourth determining sub-module (not shown), configured to determine, based on the priority score, a server from among the screened intermediate servers.

In all embodiments of the present disclosure, the screening sub-module (not shown) may be configured to:
determine, based on the virtual machine configuration information and the resource information, a server screening condition; and
determine, from among the plurality of candidate servers, the candidate server of which a to-be-evaluated metric in the server basic information satisfies the server screening condition as the intermediate server.

In all embodiments of the present disclosure, the third determining sub-module (not shown) may be configured to:
acquire, for each intermediate server among the plurality of candidate servers, a number of server threads, a number of server cores, a storage type, and an internal memory size of the candidate server from the server basic information; and
determine the priority score of the intermediate server based on the number of server threads, the number of server cores, the storage type, and the internal memory size.

In all embodiments of the present disclosure, the determining the priority score of the intermediate server based on the number of server threads, the number of server cores, the storage type, and the internal memory size may include:
determining a first score of the intermediate server based on the number of server threads;
determining a second score of the intermediate server based on the number of server cores;
determining a third score of the intermediate server based on the storage type;
determining a fourth score of the intermediate server based on the internal memory size; and
obtaining the priority score based on a weighted sum of the first score, the second score, the third score, and the fourth score.

In all embodiments of the present disclosure, the server may include a plurality of candidate resource entity architectures, and each candidate resource entity architecture of the plurality of candidate resource entity architectures has a candidate architecture index.

The first acquisition unit 2220 is configured to:
acquire, when a type of the virtual machine is a first type, a server index of a server;
look up, based on the server index, an architecture index mapped to the server index in a preset mapping table, the preset mapping table indicating a candidate architecture index of a candidate resource entity architecture inside each candidate server in which a respective network interface card is located; and
determine, from among the plurality of candidate resource entity architectures, a candidate resource entity architecture having a candidate architecture index consistent with the architecture index as the processing resource entity architecture.

In all embodiments of the present disclosure, the apparatus for creating the virtual machine 2200 may further include a first creation unit (not shown), and the first creation unit (not shown) is configured to:
acquire, from the server, a processing resource entity architecture not associated with the network interface card when the type of the virtual machine is a second type, the second type indicating that the virtual machine is not configured to cooperate with the network interface card;
acquire resource information for the virtual machine;
determine, based on the resource information, a processing resource entity in the processing resource entity architecture; and
create the virtual machine by using the processing resource entity, where the processing resource entity is allocated to the virtual machine.

In all embodiments of the present disclosure, the apparatus for creating the virtual machine 2200 may further include a second creation unit (not shown), and the second creation unit (not shown) is configured to:
acquire, from the server, an idle resource entity architecture when the type of the virtual machine is a third type, the third type indicating that overall resources of the server are configured to create the virtual machine, and the virtual machine is configured to cooperate with the network interface card; and
create the virtual machine by using a processing resource entity in the idle resource entity architecture and the network interface card, where the processing resource entity in the idle resource entity architecture is allocated to the virtual machine.

In all embodiments of the present disclosure, the apparatus for creating the virtual machine 2200 may further include a storage unit (not shown), and the storage unit (not shown) is configured to:
in response to a data collection request for a plurality of candidate servers, acquire, for each candidate server of the plurality of candidate servers, when it is determined that a respective script for the candidate server is downloaded, the server basic information of the candidate server, processing resource entity architecture data, and the processing resource entity architecture in which a respective network interface card is located based on the script;
construct a preset mapping table based on an architecture index of the processing resource entity architecture of each candidate server;
mark, for the candidate server, resource entity architectures other than the processing resource entity architecture; and
store the server basic information, the processing resource entity architecture data, and the preset mapping table into a preset database.

In all embodiments of the present disclosure, the constructing a preset mapping table based on an architecture index of the processing resource entity architecture of each candidate server may include:
acquiring, for each candidate server, a server index of the candidate server;
determining the server index as a key, determining the architecture index as a value, and generating a key-value pair based on the key and the value; and
generating the preset mapping table based on the key-value pairs of the plurality of candidate servers.

The method for creating the virtual machine according to all embodiments of the present disclosure may be implemented by a computer device. The computer device includes a terminal and a server, which are described below, respectively.

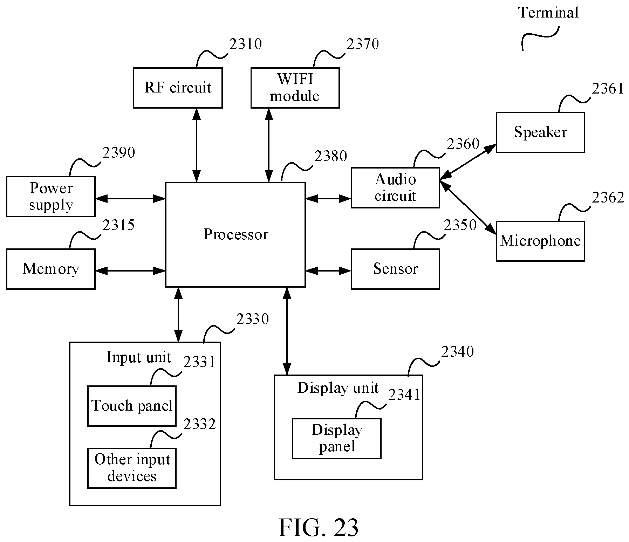

FIG. 23 is a partial structural block diagram of a terminal implementing a method for creating a virtual machine according to an embodiment of the present disclosure. The terminal includes a radio frequency (RF) circuit 2310, a memory 2315, an input unit 2330, a display unit 2340, a sensor 2350, an audio circuit 2360, a wireless fidelity (WiFi) module 2370, a processor 2380, a power supply 2390, and other components. A person skilled in the art may understand that a terminal structure shown in FIG. 23 does not constitute a limitation on a mobile phone or a computer, and the mobile phone or the computer may include more or fewer components than those shown in the figure, or some combinations of the components, or different arrangements of the components.

The RF circuit 2310 may be configured to receive and transmit information or receive and transmit signals during a call process. In particular, after receiving downlink information from a base station, the RF circuit 2310 provides the downlink information to the processor 2380 for processing. In addition, designed uplink data is transmitted to the base station.

The memory 2315 may be configured to store software programs and modules. The processor 2380 executes various functional applications of the object terminal and performs data processing by running the software programs and modules stored in the memory 2315.

The input unit 2330 may be configured to receive input digital or character information, and generate key signal input related to settings of the object terminal and function control. Specifically, input unit 2330 may include a touch panel 2331 and other input devices 2332.

The display unit 2340 may be configured to display input information or provided information and various menus of the object terminal. The display unit 2340 may include a display panel 2341.

The audio circuit 2360, a speaker 2361, and a microphone 2362 may provide an audio interface.

In all embodiments of the present disclosure, the processor 2380 included in the terminal may perform the method for creating the virtual machine in the foregoing embodiments.

The terminal of the embodiments of the present disclosure includes, but is not limited to, a mobile phone, a computer, a smart voice interaction device, a smart appliance, an in-vehicle terminal, an aircraft, and the like. The embodiments of the present disclosure may be applied to various scenarios, including, but not limited to, data security, blockchain, computers, cloud computing, information technology, and the like.

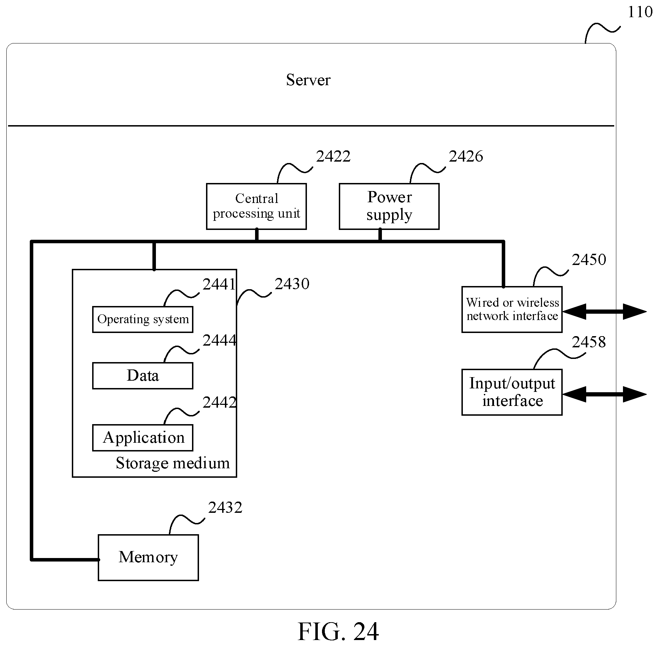

FIG. 24 is a partial structural block diagram of a server implementing a method for creating a virtual machine according to an embodiment of the present disclosure. The server may vary significantly due to different configurations or performance, and may include one or more central processing units (CPUs) 2422 (for example, one or more processors) and a memory 2432, and one or more storage media 2430 (for example, one or more mass storage apparatuses) storing application programs 2442 or data 2444. The memory 2432 and the storage medium 2430 may be temporary storage or persistent storage. A program stored in the storage medium 2430 may include one or more modules (not shown in the figure), and each module may include a series of instruction operations in the server. Further, the CPU 2422 may be configured to communicate with the storage medium 2430, and execute a series of instruction operations in the storage medium 2430 on the server.

The server may further include one or more power supplies 2426, one or more wired or wireless network interfaces 2450, one or more input/output interfaces 2458, and/or one or more operating systems 2441, for example, Windows Server^{TM}, Mac OS X^{TM}, Unix^{TM}, Linux^{TM}, and FreeBSD^{TM}.

The CPU 2422 in the server may be configured to perform the method for creating the virtual machine in the embodiments of the present disclosure.

In all embodiments of the present disclosure, a computer-readable storage medium is provided. The computer-readable storage medium may be configured to store a computer program, and the computer program is configured to perform the method for creating the virtual machine in the foregoing embodiments.

In all embodiments of the present disclosure, a computer program product is provided. The computer program product may include a computer program. A processor of an electronic device reads and executes the computer program, causing the electronic device to perform the foregoing virtual machine creation processing method.

In the specification of the present disclosure and the foregoing accompanying drawings, the terms "first", "second", "third", "fourth", and the like (if present) are intended to distinguish between similar objects, instead of describing a particular order or a precedence sequence. Data used in this manner may be interchanged in appropriate circumstances, so that the embodiments of the present disclosure described herein may be implemented, for example, in sequences other than those illustrated or described herein. In addition, the terms "include", "comprise", and any variants thereof are intended to cover a non-exclusive inclusion. For example, a process, method, system, product, or apparatus that includes a series of operations or units is not necessarily limited to those operations or units expressly listed, but may include other operations or units not expressly listed or inherent to such a process, method, product, or apparatus.

In the present disclosure, "at least one (item)" means one or more, and "plurality" means two or more. "And/or" is configured for describing an association relationship between associated objects, representing that three relationships may exist. For example, "A and/or B" may represent: only A exists, only B exists, or both A and B exist simultaneously. A and B may be singular or plural. The character "/" generally represents an "or" relationship between associated objects before and after it. "At least one of the following items" or similar expressions refer to any combination of these items, including any combination of a single item or plural items. For example, "at least one of a, b, or c" may represent: a, b, c, "a and b", "a and c", "b and c", or "a and b and c", where a, b, and c may be single or multiple.

In the description of the embodiments of the present disclosure, "a plurality of" (or "multiple") means two or more; "greater than", "less than", "exceeding", and the like are understood to exclude the base number; and "or more", "or less", "within", and the like are understood to include the base number.

In all embodiments provided by the present disclosure, the disclosed systems, apparatuses, and methods may be implemented in other ways. For example, the foregoing apparatus embodiments are merely illustrative. For example, division of units is merely a logical functional division, and actual implementation may have other division manners. For example, a plurality of units or components may be combined or integrated into another system, or some features may be omitted or not executed. In addition, the coupling, direct coupling, or communication connection shown or discussed between each other may be an indirect coupling or communication connection through some interfaces, apparatuses, or units, and may be in electrical, mechanical, or other forms.

In all embodiments of the present disclosure, the term "module" or "unit" refers to a computer program with a preset function or a part of the computer program and works, together with other related parts, to implement a preset target, and may be completely or partially implemented by using software, hardware (for example, a processing circuit or a memory), or a combination thereof. Similarly, one processor (or a plurality of processors or memories) may be configured to implement one or more modules or units. Furthermore, the module or unit may be a part of an integrated module or unit that includes the functionality of the module or unit.

A unit described as a separate component may or may not be physically separated. A component displayed as a unit may or may not be a physical unit, that is, the component may be located in one place, or may be distributed across a plurality of network units. Some or all of the units may be selected according to actual needs to achieve the purpose of the solution of the embodiment.

In addition, in various embodiments of the present disclosure, functional units may be integrated into one processing unit, or each unit may physically exist separately, or two or more units may be integrated into one unit. The foregoing integrated unit may be implemented in a form of hardware, or may be implemented in a form of a software functional unit.

If the integrated unit is implemented in the form of a software functional unit and sold or used as an independent product, the integrated unit may be stored in a computer-readable storage medium. Based on such understanding, the technical solution of the present disclosure essentially, or a part making a contribution to the prior art, or all or part of the technical solution may be embodied in the form of a software product. The computer software product is stored in a storage medium, and includes several instructions for enabling a computer device (which may be a personal computer, a server, a network device, or the like) to execute all or part of operations of the methods in various embodiments of the present disclosure. The foregoing storage medium includes: a universal serial bus (USB) flash drive, a mobile hard disk, a read-only memory (ROM), a random access memory (RAM), a magnetic disk, an optical disc, and other media capable of storing program code.

Various implementations according to the embodiments of the present disclosure may be combined in different manners to form other embodiments to achieve different technical effects.

The foregoing is a specific description of the implementations of the present disclosure. However, the present disclosure is not limited to the foregoing implementations.

## Claims

1. A method for creating a virtual machine, executable by a computer device, the method comprising:
determining, in response to a creation request for creating the virtual machine, a server for creating the virtual machine, the server comprising a network interface card;
acquiring, from the server, a processing resource entity architecture associated with the network interface card when a type of the virtual machine is a first type indicating that the virtual machine is configured to cooperate with the network interface card;
acquiring resource information for the virtual machine;
determining, based on the resource information, a processing resource entity in the processing resource entity architecture; and
creating the virtual machine by using the processing resource entity and the network interface card, wherein the processing resource entity is allocated to the virtual machine.

2. The method according to claim 1, wherein the processing resource entity architecture comprises a plurality of candidate resource entity levels; and
the determining, based on the resource information, a processing resource entity in the processing resource entity architecture, comprises:
determining, based on the resource information, a resource entity level from among the plurality of candidate resource entity levels; and
determining, in the resource entity level, the processing resource entity.

3. The method according to claim 2, wherein the determining, based on the resource information, a resource entity level from among the plurality of candidate resource entity levels comprises:
determining a baseline number of processing resources of each candidate resource entity level among the plurality of candidate resource entity levels;
acquiring a required number of processing resources for creating the virtual machine from the resource information; and
determining, based on the required number of processing resources and the baseline number of processing resources of each candidate resource entity level, the resource entity level from among the plurality of candidate resource entity levels.

4. The method according to claim 3, wherein the determining, based on the required number of processing resources and the baseline number of processing resources of each candidate resource entity level, the resource entity level from among the plurality of candidate resource entity levels comprises:
comparing the required number of processing resources with the baseline number of processing resources of the candidate resource entity level; and
determining, from among the plurality of candidate resource entity levels, the candidate resource entity level having the baseline number of processing resources greater than the required number of processing resources and having a lowest level rank as the resource entity level.

5. The method according to claim 3 or 4, wherein each candidate resource entity level comprises a plurality of candidate processing resource entities; and
the determining a baseline number of processing resources of each candidate resource entity level among the plurality of candidate resource entity levels comprises:
acquiring, for each candidate resource entity level, a number of candidate processing resources of each candidate processing resource entity among the plurality of candidate processing resource entities in the candidate resource entity level; and
determining the maximum number of candidate processing resources as the baseline number of processing resources of the candidate resource entity level.

6. The method according to any one of claims 2 to 5, wherein the resource entity level comprises a plurality of candidate processing resource entities; and
the determining, in the resource entity level, the processing resource entity comprises:
acquiring a number of candidate processing resources of each candidate processing resource entity among the plurality of candidate processing resource entities in the resource entity level;
performing, for each candidate processing resource entity in the resource entity level, resource scoring based on the baseline number of processing resources of each candidate resource entity level and the number of candidate processing resources of the candidate processing resource entity, to obtain a resource scoring result; and
determining, based on the resource scoring result, the processing resource entity from among the plurality of candidate processing resource entities distributed in the resource entity level.

7. The method according to any one of claims 1 to 6, wherein the determining, in response to a creation request for creating the virtual machine, a server for creating the virtual machine comprises:
acquiring a plurality of candidate servers;
acquiring, in response to the creation request for creating the virtual machine, virtual machine configuration information and the resource information for the virtual machine; and
determining, based on the virtual machine configuration information and the resource information, the server from among the plurality of candidate servers.

8. The method according to claim 7, wherein the determining, based on the virtual machine configuration information and the resource information, the server from among the plurality of candidate servers comprises:
acquiring server basic information of each candidate server among the plurality of candidate servers;
screening, based on the virtual machine configuration information, the resource information, and the server basic information, intermediate servers from among the plurality of candidate servers;
determining, for each intermediate server among the screened intermediate servers, a priority score of the intermediate server based on the server basic information; and
determining, based on the priority score, the server from among the screened intermediate servers.

9. The method according to claim 8, wherein the screening, based on the virtual machine configuration information, the resource information, and the server basic information, intermediate servers from among the plurality of candidate servers comprises:
determining, based on the virtual machine configuration information and the resource information, a server screening condition; and
determining, from among the plurality of candidate servers, the candidate server of which a to-be-evaluated metric in the server basic information satisfies the server screening condition as the intermediate server.

10. The method according to claim 8, wherein the determining, for each intermediate server among the screened intermediate servers, a priority score of the intermediate server based on the server basic information comprises:
acquiring, for each intermediate server, a number of server threads, a number of server cores, a storage type, and an internal memory size of the candidate server from the server basic information; and
determining the priority score of the intermediate server based on the number of server threads, the number of server cores, the storage type, and the internal memory size.

11. The method according to claim 10, wherein the determining the priority score of the intermediate server based on the number of server threads, the number of server cores, the storage type, and the internal memory size comprises:
determining a first score of the intermediate server based on the number of server threads;
determining a second score of the intermediate server based on the number of server cores;
determining a third score of the intermediate server based on the storage type;
determining a fourth score of the intermediate server based on the internal memory size; and
obtaining the priority score based on a weighted sum of the first score, the second score, the third score, and the fourth score.

12. The method according to any one of claims 1 to 11, wherein the server comprises a plurality of candidate resource entity architectures, and each candidate resource entity architecture of the plurality of candidate resource entity architectures has a candidate architecture index; and
the acquiring, from the server, a processing resource entity architecture associated with the network interface card when a type of the virtual machine is a first type comprises:
acquiring, when the type of the virtual machine is the first type, a server index of the server;
looking up, based on the server index, an architecture index mapped to the server index in a preset mapping table, the preset mapping table indicating a candidate architecture index of a candidate resource entity architecture inside each candidate server in which a respective network interface card is located; and
determining, from among the plurality of candidate resource entity architectures, the candidate resource entity architecture having the candidate architecture index consistent with the architecture index as the processing resource entity architecture.

13. The method according to any one of claims 1 to 12, wherein after the determining a server for creating the virtual machine, the method further comprises:
when the type of the virtual machine is a second type indicating that the virtual machine is not configured to cooperate with the network interface card,
acquiring, from the server, a processing resource entity architecture not associated with the network interface card;
acquiring resource information for the virtual machine;
determining, based on the resource information, a processing resource entity in the processing resource entity architecture; and
creating the virtual machine by using the processing resource entity, wherein the processing resource entity is allocated to the virtual machine.

14. The method according to any one of claims 1 to 13, wherein after the determining a server for creating the virtual machine, the method further comprises:
when the type of the virtual machine is a third type indicating that overall resources of the server are configured to create the virtual machine and the virtual machine is configured to cooperate with the network interface card,
acquiring, from the server, an idle resource entity architecture; and
creating the virtual machine by using a processing resource entity in the idle resource entity architecture and the network interface card, wherein the processing resource entity in the idle resource entity architecture is allocated to the virtual machine.

15. The method according to any one of claims 1 to 14, wherein before the determining a server for creating the virtual machine, the method further comprises:
in response to a data collection request for the plurality of candidate servers,
acquiring, for each candidate server of the plurality of candidate servers, when it is determined that a respective script for the candidate server is downloaded, server basic information of the candidate server, processing resource entity architecture data, and a processing resource entity architecture in which a respective network interface card is located based on the script;
constructing a preset mapping table based on an architecture index of the processing resource entity architecture of the candidate server;
marking, for each candidate server, resource entity architectures other than the processing resource entity architecture; and
storing the server basic information, the processing resource entity architecture data, and the preset mapping table into a preset database.

16. An apparatus for creating a virtual machine, the apparatus comprising:
a first determining unit, configured to determine, in response to a creation request for creating the virtual machine, a server for creating the virtual machine, the server comprising a network interface card;
a first acquisition unit, configured to acquire, from the server, a processing resource entity architecture associated with the network interface card when a type of the virtual machine is a first type indicating that the virtual machine is configured to cooperate with the network interface card;
a second acquisition unit, configured to acquire resource information for the virtual machine;
a second determining unit, configured to determine, based on the resource information, a processing resource entity in the processing resource entity architecture; and
a creation unit, configured to create the virtual machine using the processing resource entity and the network interface card, wherein the processing resource entity is allocated to the virtual machine.

17. An electronic device, comprising a memory and a processor, the memory having a computer program stored therein, wherein the processor, when executing the computer program, implements the method for creating the virtual machine according to any one of claims 1 to 15.

18. A computer-readable storage medium, having a computer program stored therein, the computer program, when executed by a processor, implementing the method for creating the virtual machine according to any one of claims 1 to 15.

19. A computer program product, comprising a computer program, the computer program being read and executed by a processor of an electronic device to cause the electronic device to perform the method for creating the virtual machine according to any one of claims 1 to 15.
